# EUROPÄISCHE PATENTSCHRIFT

(11) **EP 2 752 726 B1**
(45) Veröffentlichungstag und Bekanntmachung des Hinweises auf die Patenterteilung: **27.05.2015**
(21) Anmeldenummer: 13150493.8
(22) Anmeldetag: 08.01.2013
(51) Int. Cl.: G05D 1/02, A47L 11/40

(54) **Bodenbehandlungsmaschine und Verfahren zum Behandeln von Bodenflächen**
Floor treatment machine and method for treating floor surfaces
Machine de traitement de surface et procédé de traitement associé

(43) Veröffentlichungstag der Anmeldung: 09.07.2014
(73) Patentinhaber: Cleanfix Reinigungssysteme AG, 9247 Henau-Uzwil (CH)
(72) Erfinder: LAMON, Pierre, 1066 Epalinges (CH); TERRIEN, Grégoire, 1025 St-Sulpice (CH); Jeannotat, Yannis, 1185 Mont sur Rolle (CH); FLÜCK, Roland, 8374 Oberwangen (CH)
(74) Vertreter: PATWIL AG

(56) Entgegenhaltungen:
- EP-A1- 0 142 594
- EP-A2- 1 265 119
- WO-A1-03/014852
- FR-A1- 2 861 856
- US-A- 5 353 224
- US-A- 5 696 675
- US-A- 5 841 259
- US-A1- 2005 000 543
- US-A1- 2009 228 166
- US-B1- 6 830 120
- SCHMIDT G ET AL: "An advanced planning and navigation approach for autonomous cleaning robot operations", INTELLIGENT ROBOTS AND SYSTEMS, 1998. PROCEEDINGS., 1998 IEEE/RSJ INTE RNATIONALCONFERENCE ON, IEEE, Bd. 2, 13. Oktober 1998 (1998-10-13), Seiten 1230-1235, XP010311555, DOI: 10.1109/IROS.1998.727467 ISBN: 978-0-7803-4465-5

## Beschreibung

Die Erfindung bezieht sich auf eine automatische Bodenbehandlungsmaschine nach dem Oberbegriff des Anspruches 1 und ein Verfahren zum Behandeln von Bodenflächen nach dem Oberbegriff des Anspruchs 11 sowie ein Computerprogrammprodukt, welches die Durchführung eines Verfahrens nach dem Oberbegriff des Anspruchs 11 auf einer programmgesteuerten Bodenbehandlungsmaschine veranlasst.

Die vorliegende Erfindung betrifft insbesondere Maschinen und Verfahren zum Behandeln von Böden, deren behandelbare Bodenfläche durch feste Elemente, wie die Bodenfläche berandende Wandabschnitte oder auf der Bodenfläche angeordnete Elemente wie Säulen, innere Wandabschnitte oder feste Regale, und gegebenenfalls durch verstellbare Elemente eingeschränkt ist.

Aus dem Stande der Technik sind viele Lösungen bekannt bei denen automatische Bodenreinigungsmaschinen selbständig Reinigungsverfahren auf Gebäudeböden durchführen. Dabei gibt es zwei charakteristisch verschiedene Ansätze. Beim ersten Ansatz wird die Bodenfläche nach einem Zufallsprinzip überfahren, beispielsweise indem beim Auftreffen auf ein Hindernis ein zufälliger Richtungswechsel gewählt wird. Weil keine Karte des zu reinigenden Raumes und kein Plan für einen zweckmässigen Reinigungsweg erstellt wird, ist der Speicherbedarf zwar klein, dafür ist aber der Aufwand für die Bearbeitungsbewegung sehr gross. Es werden viele Bereiche mehrmals überfahren und für eine möglichst vollständige Reinigung muss eine lange Reinigungszeit vorgesehen werden. Für eine professionelle Reinigung ist dieses Verfahren nicht geeignet.

Beim zweiten Ansatz wird die Bodenfläche möglichst genau kartiert und ein zweckmässiger Fahrweg bestimmt. Beim Reinigen muss das Abfahren des geplanten Weges kontrolliert werden. Zudem muss eine Lösung für das Umfahren von Hindernissen und das anschliessende Auffinden des geplanten Weges vorgesehen werden. Diese Lösungen Verwenden zum Speichern der Raumkarte, zum Planen des Reinigungsweges und zum Speichern der gereinigten Bereiche Gitternetze. Weil die Auflösung des Gitters möglichst klein sein muss, müssen entsprechend grosse Datenmengen gespeichert und bearbeitet werden.

US 5279672 beschreibt einen Reinigungsroboter, der ein Gehäuse, zwei Antriebsräder, zwei Stützräder, an der vorderen Seite drehbare Reinigungsbürsten mit Reinigungsflüssigkeitszuführung, an der Rückseite eine Absaugeinrichtung zum Absaugen der verschmutzten Reinigungsflüssigkeit umfasst. Um die Bewegung des Reinigungsroboters zu steuern ist eine Steuereinrichtung mit Sensoren eingesetzt. Auf der Oberseite des Reinigungsroboters ist ein Infrarot-Laser-Scanner angeordnet, welcher Barcode-Informationen von an den Raumberandungen angeordneten, reflektierenden Targets liest. Die reflektierenden Targets ermöglichen es dem Reinigungsroboter mit einer Triangulation seine Position und den aktuellen Reinigungsbereich zu bestimmen. Für eine genaue Positionsbestimmung muss der Laser-Scanner die Winkellage von mindestens 3 verschiedenen Targets gleichzeitig erfassen. Ohne das Erkennen von drei Targets fährt der Roboter noch eine vorgegebenen Distanz weiter und wenn er dann immer noch nicht drei Targets gleichzeitig erfasst hat, so stellt er den Reinigungsbetrieb ein und sendet ein Alarmsignal aus. Wenn er seine Position und den Reinigungsbereich erfassen kann, so muss er einem vorgängig programmierten Reinigungsplan folgen, wobei er beim Anfahren eines verstellbaren Hindernisses bzw. Elementes versucht dieses zu umfahren. Diese Lösung hat den Nachteil, dass die Targets mit ihrem Barcode zuerst montiert werden müssen und zudem für jeden Raum ein Reinigungsplan programmiert werden muss. Wenn mobile Elemente vor Targets gestellt sind, so kann der Reinigungsroboter nicht mehr automatisch reinigen.

EP 0 635 773 B1 beschreibt ein Verfahren zur Erstellung einer Umgebungskarte und zur Bestimmung einer Eigenposition für mobile Einheiten, die sich in einer unbekannten Umgebung bewegen. Zur Korrektur der Position der mobilen Einheit in der Umgebungskarte und der Lage einer Landmarke in der Umgebungskarte wird von einer bestimmten Position aus aufgrund der Bewegungshistorie ein bestimmter Abstand zur Landmarke prädiziert, und aufgrund der aktuellen Position ein bestimmter Abstand zur Landmarke gemessen. Der Unterschied, der zwischen der prädizierten und der gemessenen Entfernung zur Landmarke auftritt, wird als Systemfehler bezeichnet. Der Systemfehler wird nun in Kenntnis der Unsicherheit, die bei der Positionsbestimmung der mobilen Einheit und die bei der Lagebestimmung der Landmarke auftritt, in deren Verhältnis aufgeteilt und zur Korrektur der Position der mobilen Einheit und der Lage der Landmarke in der Umgebungskarte verwendet. So können Unsicherheiten während der Bewegung der mobilen Einheit verringert werden. Es wird hier zwar auf das Montieren von Targets verzichtet, die Orientierung erfolgt aber trotzdem an eng begrenzten Landmarken, welche in Räumen mit verschiebbaren Hindernissen häufig verdeckt sein können.

EP 1 903 413 A2 beschreibt das Erstellen einer Karte, wobei in einem Gitternetz besetzte Punkte eingetragen werden und die Dicke der Hindernisse und der Wand entsprechend der Ausdehnung des Roboters erhöht werden, so dass der Roboter als Punkt ohne Ausdehnung auf der Karte bewegt werden kann. Eine Karte auf der die Raumberandungen als besetzte Gitterpunkte eingetragen sind, hat immer eine Ungenauigkeit entsprechend der Zellengrösse des Gitters und führt zu grossen Datenmengen, weil das Gitternetz genügend fein sein muss, damit die Berandung genügend genau eingetragen werden kann. Ein weiterer Nachteil der beschriebenen Lösung besteht darin, dass von der Steuerung des Roboters eine Reinigungsrichtung bestimmt und ein definierter Fahrweg entsprechend der vorgegebenen Reinigungsrichtung gefahren werden muss. Um diese Schritte durchzuführen muss die Steuerung grosse Datenmengen speichern und aufwändige Berechnungen durchführen.

US 8060254 B2 beschreibt ebenfalls Distanzmessungen zur Raumbegrenzung um Gitterpunkte zu erhalten. Aus den Gitterpunkten der Berandung werden Merkmalspunkte extrahiert. Mit einem Simultaneous Localization And Map building Algorithmus (SLAM) werden Positionsschätzung und Merkmalspunkte aktualisiert. Aus der häufigsten Richtung der Berandung wird eine Fegrichtung bestimmt und gemäss der Fegrichtung wird das Gitternetz gelegt. Eine Karte auf der die Raumberandungen als besetzte Gitterpunkte eingetragen sind, hat immer eine Ungenauigkeit entsprechend der Zellengrösse des Gitters und führt zu unerwünscht grossen Datenmengen. Ein weiterer Nachteil der beschriebenen Lösung besteht darin, dass aus der Berandung bzw. Karte eine Reinigungsrichtung bestimmt werden muss.

WO 03 014852 betrifft die Planung einer erweiterten Bahn für eine autonome mobile Einheit, bei der ein Teilstück einer vorgegebenen Bahn ermittelt wird, welches von der autonomen mobilen Einheit temporär nicht abfahrbar ist. Zur Planung einer Bahn zum späteren Abfahren des temporär versperrten Teilstücks wird ein erster Bahnpunkt der vorgegebenen Bahn unter Verwendung mindestens eines vorgebbaren Abstandskriteriums, welches einen Abstand des Teilstücks zu dem ersten Bahnpunkt berücksichtigt, ermittelt. Ein Erweiterungsteilstück wird ermittelt, welches an dem ersten Bahnpunkt beginnt, an einem zweiten Bahnpunkt der vorgegebenen Bahn endet und mindestens das tempörar versperrte Teilstück umfasst. Die erweiterte Bahn wird geplant, wobei das Erweiterungsteilstück an dem ersten Bahnpunkt in die vorgegebene Bahn eingefügt wird.

EP 1 557 730 A1 beschreibt eine Lösung bei der das Bearbeitungsgerät eine Gitterkarte des Raumes erstellt und den Raum in eine Vielzahl von Teilsegmenten unterteilt, die dann anhand eines vorgegebenen Bewegungsmusters nacheinander bearbeitet werden. Dabei wird die Lage des Bearbeitungsgerätes anhand von Referenzpunkten ermittelt, die aus der Aussenkontur des Raumes ermittelt wurden. Auch hier ist der Datenaufwand für die Karte und die Vorgabe und Kontrolle des Bewegungsmusters sehr aufwändig.

In Läden können Verkaufsständer, Hinweisschilder, Paletten, Behälter oder direkt Produkte immer wieder auf anderen Bereichen der Bodenfläche angeordnet sein. Entsprechend ist für das Putzen in vorgegebenen zeitlichen Abständen immer wieder mit ganz anderen freien Bodenflächen zu rechnen. Die aus dem Stande der Technik bekannten Lösungen für das professionelle automatische Reinigen müssten die jeweils neuen Situationen immer wieder neu kartieren, was mit einem unzumutbaren Aufwand verbunden ist. Darum werden automatische Reinigungsvorrichtungen nicht in Läden eingesetzt.

Automatische Bodenbehandlungen sind nicht auf das Reinigen beschränkt. Es kann beispielsweise auch eine Bearbeitung, wie das Schleifen der Bodenfläche oder das Auftragen einer Oberflächenschicht, von einer automatischen Bodenbehandlungsmaschine durchgeführt werden. Unter den Begriff der Bodenbehandlung fällt auch das Kontrollieren der Bodenfläche bzw. das Durchführen von Messungen an der gesamten Bodenfläche. Solche Messungen können mit Behandlungen an ausgewählten Stellen verbunden sein. Mit Bodenflächen sind nicht nur Flächen in Räumen gemeint, sondern auch Flächen im Freien, wobei dann anstelle der Wände, Säulen oder anderen Orientierungselementen sicherlich für Positionsbestimmungen Positionierungsbereiche vorgesehen werden können um daran Distanzmessungen zu machen. Die Bodenbehandlung im Freien kann vom Schneiden einer Rasenfläche, über Erdbearbeitung, Düngung, Säen, Unkrautbehandlung, Ernten bis zur Suche von Metallteilen oder gar Minen alles umfassen.

Die erfindungsgemässe Aufgabe besteht nun darin eine einfache Lösung zu finden, die mit einem möglichst kleinen Aufwand für das Erfassen, das Speichern und für die Behandlungsbewegung verbunden ist. Die Lösung soll auch für Bodenflächen geeignet sein, die auf einem grossen Flächenanteil verschiebbare und damit beim Behandeln variabel positionierte Elemente umfassen.

Die Aufgabe wird durch eine Bodenbehandlungsmaschine mit den Merkmalen des Anspruches 1, durch ein Verfahren mit den Merkmalen des Anspruchs 11 und ein Computerprogrammprodukt mit den Merkmalen des Anspruchs 15 gelöst. Die abhängigen Ansprüche beschreiben alternative bzw. vorteilhafte Ausführungsvarianten, welche weitere Aufgaben lösen.

Bei der Lösung der Aufgabe wurde erkannt, dass auf die Kartierung der Berandung der Bodenfläche verzichtet werden kann, wenn der Fahrweg nicht anhand einer Karte bestimmt wird. Mit wenigen Fahr- und Speicherschritten kann ein einfaches und sicheres Wählen eines erfolgreichen Fahrweges garantiert werden, wobei ein Fahrweg dann erfolgreich ist, wenn er die ganze Bodenfläche abdeckt, möglichst kurz ist und auch bei variabel platzierten Hindernissen funktioniert. Die Berandung der Bodenfläche wird als Hindernis behandelt und daher immer dann erfasst, wenn die Bodenbehandlungsmaschine auf einen Bereich der Bodenberandung trifft. Hindernisse und damit auch die Bodenberandung werden vorzugsweise über Distanzmessungen eines Scan-Sensors der Bodenbehandlungsmaschine erfasst, wobei der Scan-Sensor insbesondere vor den Antriebsrädern im Wesentlichen im Höhenbereich der Antriebsräder angeordnet ist. Bei einer bevorzugten Ausführung wird ein Laser-Scanner verwendet, der einen Winkelbereich von 270° abdeckt.

Damit auch Hindernisse oder Bodenberandungen erfasst werden, welche sich nicht über den Höhenbereiche mit dem Scan-Sensor erstrecken, werden vorzugsweise auch andere Sensoren für die Hinderniserkennung eingesetzt. Die Bodenbehandlungsmaschine umfasst beispielsweise Ultraschallsensoren und/oder Infrarotsensoren. Die Ultraschallsensoren sind vorzugsweise so ausgerichtet, dass sie Hindernisse erfassen, welche sich in einem Abstand vom Boden gegen das Innere der Bodenfläche erstrecken. Die Infrarotsensoren sind vorzugsweise gegen den Boden gerichtet, um Hindernisse im Boden, insbesondere Stufen, zu erfassen.

Zur Hinderniserkennung kann die Bodenbehandlungsmaschine auch mindestens einen Kontaktsensor umfassen, wobei vorzugsweise mindestens ein Auslenkungssensor zwischen einem Fahrgestell und einem in Fahrrichtung vorne liegenden Gehäusebereich angeordnet ist. Wenn nun ein Hindernis mit dem vorne liegenden Gehäusebereich in Kontakt kommt, wird das Hindernis erkannt, die Bodenbehandlungsmaschine gestoppt und das detektierte Hindernis umfahren.

Die Hindernisse umfassen nebst den physischen Hindernissen auch virtuelle Hindernisse, wie beispielsweise offene Türen, die nicht durchfahren werden sollen. Die virtuellen Hindernisse werden bei einer bevorzugten Ausführungsform über eine Steuerung der Bodenbehandlungsmaschine eingegeben und haben die gleiche Wirkung wie physische Hindernisse.

Die erfindungsgemässen Fahr- und Speicherschritte umfassen die nachfolgenden Schritte:
das Festlegen einer Behandlungsrichtung mit vorwärts und rückwärts Orientierung,
das Vorgeben von voneinander beabstandeten Fahrlinien senkrecht zur Behandlungsrichtung,
das Abfahren von Wegsegmenten auf Fahrlinien von Anfangspunkten zu Endpunkten,
die Festlegung von entgegengesetzten Fahrrichtungen auf benachbarten Fahrlinien,
das Festlegen von Endpunkten wenn das Weiterfahren auf der jeweiligen Fahrlinie aufgrund eines von einer Hindernis-Erkennungseinrichtung erfassten Hindernisses nicht möglich ist,
das zu jedem Endpunkten auf einem Wegsegmentspeicher durchgeführte Speichern des Anfangspunktes sowie des Endpunktes des abgefahrenen Wegsegmentes und eines der Zustände "vollständig behandelt" oder "unvollständig behandelt" sowie zumindest bei "unvollständig behandelt" zusätzlich das Speichern einer Richtungsinformation, wobei aus der Richtungsinformation hervorgeht, in welcher Richtung ausgehend vom entsprechenden Endpunkt unvollständig behandelte Bereiche vorliegen,
die bei den Endpunkten zum Finden jeweils neuer Anfangspunkte ausgelöste Konturfolgebewegung, bei der die Bodenbehandlungsmaschine dem Hindernis folgt, bis sie auf eine Fahrlinie trifft, wobei
   die Konturfolgebewegung in Richtung der jeweils aktuellen Orientierung der Behandlungsrichtung beginnt,
   beim Treffen der vor der Konturfolgebewegung befahrenen Fahrlinie auf einem gemäss Wegsegmentspeicher noch nicht abgefahrenen Wegsegment dort ein neuer Anfangspunkt festgelegt sowie die Fahrrichtung dieser Fahrlinie beibehalten wird,
   beim Treffen einer benachbarten Fahrlinie auf einem gemäss Wegsegmentspeicher noch nicht abgefahrenen Wegsegment dort ein neuer Anfangspunkt festgelegt sowie die Fahrrichtung der benachbarten Fahrlinie gewählt wird,
   beim Treffen einer Fahrlinie auf einem gemäss Wegsegmentspeicher bereits abgefahrenen Wegsegment das Ende einer Gruppe von nebeneinander verlaufenden Wegabschnitten festgestellt wird, wobei die Steuerung dann im Wegsegmentspeicher einen Endpunkt mit dem Zustand "unvollständig behandelt" sucht und mit einer Positionssuchbewegung anfährt, um von diesem Endpunkt aus in die zum Endpunkt gespeicherte Orientierung der Behandlungsrichtung eine neue Gruppe von nebeneinander verlaufenden Wegabschnitten in Angriff zu nehmen bis kein Endpunkt mit dem Zustand "unvollständig behandelt" mehr vorhanden ist.

Für die Kontrolle der bereits befahrenen bzw. noch zu befahrenden Bodenbereiche genügt es, wenn zu jedem Endpunkten auf einem Wegsegmentspeicher jeweils der Anfangspunktes sowie der Endpunkt des abgefahrenen Wegsegmentes und einer der Zustände "vollständig behandelt" oder "unvollständig behandelt" sowie zumindest bei "unvollständig behandelt" zusätzlich eine Richtungsinformation gespeichert werden. Der Speicherbedarf zum Speichern der behandelten Fläche kann sehr klein gehalten werden.

Beim Fahren entlang von Fahrlinien und bei den Konturfolgebewegungen wird die aktuelle Position und Ausrichtung der Bodenbehandlungsmaschine von einer Positions-Erfassungseinrichtung bereitgestellt. Beim Fahren entlang von Fahrlinien wird geprüft, ob die aktuellen Positionsinformationen zu Positionen auf der aktuellen Fahrlinie passen. Bei Abweichungen wird die Fahrbewegung entsprechend korrigiert. Bei den Konturfolgebewegungen werden die aktuellen Positionsinformationen verwendet, um das Auftreffen auf eine Fahrlinie zu erfassen. Weil bei der Konturfolgebewegungen nur auf die aktuelle oder die nächste Fahrlinie aufgetroffen werden kann, müssen lediglich Informationen für zwei Fahrlinien bereitgehalten werden. Beim Folgen der Kontur eines Hindernisses müssen zudem die Daten zum Hindernis bzw. zu dessen Erfassung verwendet werden.

Wenn bei einer Konturfolgebewegung die Bodenbehandlungsmaschine bei einem Auftreffpunkt auf eine Fahrlinie trifft, muss geprüft werden, ob dieser Auftreffpunkt auf einem bereits abgefahrenen Wegsegment liegt. Dazu kann mit den aktuellen Informationen des Wegsegmentspeichers geprüft werden, ob der Auftreffpunkt auf einer Linie zwischen einem Paar von gespeicherten Anfangs- und Endpunkten liegt. Aufgrund der kleinen Datenmenge des Wegsegmentspeichers ist auch der Lese- und Vergleichsaufwand für das Prüfen des Auftreffpunktes bezüglich seiner möglichen Lage zwischen gespeicherten Anfangs- und Endpunkten sehr klein.

Beim Fahren entlang von Fahrlinien und beim Durchführen von Konturfolgebewegungen sind die Anforderungen an die Speichergrösse und an die Rechenleistung klein, weil die aktuellen Positionen lediglich mit Liniengleichungen und einer kleinen Anzahl von Punktepaaren in Beziehung gebracht werden müssen.

Die Behandlungsrichtung und die Fahrlinien senkrecht zur Behandlungsrichtung werden in einer bevorzugten Ausführungsform durch die Positionierung und die Ausrichtung der Bodenbehandlungsmaschine beim Start eines Behandlungsmodus festgelegt. Dazu kann beispielsweise gelten, dass mit dem Auslösen des Starts des Behandlungsmodus bestätigt wird, dass die aktuelle Ausrichtung der Bodenbehandlungsmaschine der Ausrichtung einer Fahrlinie entspricht und die vorwärts Orientierung der Behandlungsrichtung nach rechts gerichtet senkrecht zur Fahrlinie verläuft.

Damit kann die Person, welche den automatischen Behandlungsmodus startet, die Behandlungsrichtung bei jeder Behandlung neu festlegen. Diese Person kann dann beispielsweise aufgrund der benötigten Reinigungszeiten für die gesamte Bodenfläche bei unterschiedlichen Behandlungsrichtungen eine beste Behandlungsrichtung bestimmen. Es ist anzunehmen, dass die beste Behandlungsrichtung parallel oder senkrecht zu einer Wand des Raumes mit der zu reinigenden Bodenfläche verläuft. Wenn aber im Innern des Raumes grosse verstellbare Elemente mit anders gerichteten Aussenrändern angeordnet sind, so kann es sein, dass auch eine an diese Elemente angepasste Behandlungsrichtung optimal ist. Die erfindungsgemässe Lösung hat den Vorteil, dass das Bedienungspersonal mit seiner Erfahrung und einer groben Beurteilung der Berandung und der Lage der verstellbaren Elemente auf der Bodenfläche eine Optimierung der Fahrwege durch Reinigungen mit unterschiedlichen Behandlungsrichtungen machen kann.

Der einem aktuellen Endpunkt zuzuordnende Zustand "vollständig behandelt" oder "unvollständig behandelt" wird vorzugsweise anhand der Distanz vom aktuellen Endpunkt zum nächstgelegenen Anfangspunkt auf einer Fahrlinie, die in der aktuellen Orientierung der Behandlungsrichtung direkt vor der Fahrlinie mit dem aktuellen Endpunkt liegt, bestimmt, wobei bei einem Abstand über einem vorgegebenen Wert der Zustand "unvollständig behandelt" gewählt wird. Der vorgegebene Wert entspricht vorzugsweise mindestens der Ausdehnung der Bodenbehandlungsmaschine quer zu ihrer Fahrrichtung, so dass "unvollständig behandelt" dann gewählt wird, wenn die Bodenbehandlungsmaschine zwischen dem aktuellen Endpunkt und dem nächstgelegenen Anfangspunkt auf einer Fahrlinie vor der Fahrlinie mit dem aktuellen Endpunkt genügend Platz für eine Durchfahrt hat. Diese mögliche Durchfahrt wird aufgrund der aktuellen Orientierung der Behandlungsrichtung jetzt noch nicht gesucht. Mit der zum aktuellen Endpunkt durchgeführten Speicherung der Angabe "unvollständig behandelt" und der Richtungsinformation, aus der hervorgeht, in welcher Richtung ausgehend vom aktuellen Endpunkt ein unvollständig behandelter Bereich vorliegt, kann zu einem späteren Zeitpunkt von diesem Endpunkt aus in der geänderten Richtung der unbehandelte Bereich angefahren werden.

Eine Bodenbehandlungsmaschine bzw. ein Verfahren mit den oben aufgeführten Fahrschritten und gespeicherten Informationen kann erfolgreich betrieben werden, wenn bei Bedarf, also insbesondere beim Speichern von Anfangspunkten und Endpunkten sowie bei der Kontrolle der Position und Ausrichtung relativ zu Fahrlinien, die Position und die Ausrichtung der Bodenbehandlungsmaschine ermittelt werden können.

Gemäss der allgemeinsten Ausführung der Erfindung, stellt eine Positions- und Ausrichtungs-Erfassungseinrichtung die aktuelle Position und Ausrichtung auf Abfrage bereit. Dabei kann eine beliebige aus dem Stande der Technik bekannten Positions- und Ausrichtungs-Erfassungseinrichtung verwendet werden.

Aus der Vermessungstechnik sind beispielsweise Totalstationen mit automatischer Zielerfassung und Zielverfolgung bekannt (beispielsweise das handelsübliche Produkt mit der Bezeichnung Leica iCON robot 50). Wenn nun eine solche Totalstation ortsfest im Bereich der zu behandelnden Bodenfläche angeordnet wird, kann die Bodenbehandlungsmaschine bei Bedarf ihre Position und Ausrichtung über eine Funkverbindung von der Totalstation beziehen. Wenn die Bodenbehandlungsmaschine beispielsweise zwei von der Totalstation verfolgbare, auf ihrer Oberseite versetzt angeordnete Prismen umfasst, so kann aus den Positionen dieser beiden Prismen die Position und Ausrichtung der Bodenbehandlungsmaschine bestimmt werden.

Aus der Roboter Steuerung sind auch Laser Tracker basierte Positions- und Ausrichtungsbestimmungen bekannt (beispielsweise der 6DoF Leica Absolute Tracker AT901). Ein Laser Tracker kann in die Bodenbehandlungsmaschine integriert werden und gewährleistet Positions- und Ausrichtungsbestimmungen mit hoher Genauigkeit.

Es versteht sich von selbst, dass sowohl ortsfeste Positionsbestimmungsgeräte zum Erfassen der Bodenbehandlungsmaschine als auch auf der Bodenbehandlungsmaschine angeordnete Vermessungssysteme, die sich an ortsfesten Elementen orientieren, eingesetzt werden können. Weil die Sicht auf Markierungen an der Decke meist aus einem grossen Raumbereich möglich ist, sind auf der Bodenbehandlungsmaschine angeordnete Vermessungssysteme geeignet, welche sich bzw. das Koordinatensystem an Markierungen an der Decke orientieren.

In einer bevorzugten Ausführungsform wird auf ortsfeste Komponenten der Positions- und Ausrichtungs-Erfassungseinrichtung verzichtet. Dabei entsteht ein völlig autonomes Gerät, das auf allen möglichen Bodenflächen einsetzbar ist, wobei der Bodenfläche einzelne feste Elemente, wie die Bodenfläche berandende Wandabschnitte oder auf der Bodenfläche angeordnete Elemente, Säulen, innere Wandabschnitte oder feste Regale zugeordnet sein müssen, welche als Positionierungsbereiche verwendet werden. Um eine Positions- und Ausrichtungsbestimmung zu ermöglichen, macht die Steuerung der Bodenbehandlungsmaschine einen Erfassungsmodus durchführbar, bei dem aus Distanzmessungen des Scan-Sensors und Fahrinformationen der Antriebsräder das Erfassen von Positionierungsbereichen in einem der Bodenfläche zugeordneten Boden-Koordinatensystem durchführbar ist.

Bevor eine Bodenfläche von der Bodenbehandlungsmaschine behandelt werden kann, muss die Bodenbehandlungsmaschine im Erfassungsmodus über verschiedene Bereiche der Bodenfläche geführt werden, damit sie Positionierungsbereiche erfassen kann. Der Erfassungsmodus macht zum Erfassen der Positionierungsbereiche Liniensegmente im Boden-Koordinatensystem bestimmbar, wobei die bestimmten Liniensegmente gemessene Distanzpunkte an den Positionierungsbereichen mit Parametern von Kurvengleichungen als Abschnitte von kontinuierlichen Linien darstellen.

Im Behandlungsmodus macht die Bodenbehandlungsmaschine ihre Position und Ausrichtung im Boden-Koordinatensystem aus den erfassten Positionierungsbereichen und den für eine aktuelle Position erfassten Distanzmessungen des Scan-Sensors bestimmbar. Gegebenenfalls werden für die Bestimmung einer aktuellen Position und Ausrichtung der Bodenbehandlungsmaschine auch Fahrinformationen der Antriebsräder verwendet. Ausgehend von einer genauen Positionsbestimmung, die aus einer guten Übereinstimmung von beispielsweise mindestens zwei Positionierungsbereichen und den für eine aktuelle Position erfassten Distanzmessungen hervorgeht, kann mit der Verfolgung des Fahrweges, bzw. mit der Fahrinformation der Antriebsräder, auch auf der Weiterfahrt eine relativ genaue Position und Ausrichtung bestimmt werden, selbst wenn auf der Weiterfahrt keine Positionierungsbereiche sichtbar sind.

In einer bevorzugten Ausführungsform wird die effektive Ausdehnung des Gehäuses und/oder die effektive Lage des Behandlungsbereichs relativ zu den Rädern berücksichtigt und dabei im Lichte der effektiven Distanzmessungen zu einem Hindernis eine möglichst genaue Vorbeifahrt und Führung des Behandlungsbereichs beim Hindernis erzielt.

Eine bevorzugte Bodenbehandlungseinrichtung ist als Reinigungseinrichtung ausgebildet, vorzugsweise mit mindestens einer Bürste, einer Reinigungsflüssigkeitszuführung und einer Absauganordnung gegebenenfalls aber mit einem Trockensauger, oder einem Sprühextraktionsgerät oder einer Kehrmaschine. Für die Reinigungsflüssigkeit muss mindestens ein Tank und mindestens eine Pumpe vorgesehen werden. Vorzugsweise gibt es einen Tank für Reinigungsflüssigkeit, bzw. Wasser mit Reinigungsmittel, und einen Tank für das Reinigungsmittel, das dem Wasser zugegeben wird. Um auf ein häufiges Auswechseln der Reinigungsflüssigkeit verzichten zu können, ist diesem Tank eine Membrane zugeordnet. Die Membrane dient als flexible Wand zwischen Frisch- und Schmutzwasser, wobei der vorhandene Raum je nach Bedarf für Frisch- und Schmutzwasser aufgeteilt wird. Die Antriebsvorrichtung umfasst mindestens eine Batterie und mindestens einen Antriebsmotor. Die Steuerung umfasst eine Anzeige- und Eingabeeinrichtung, vorzugsweise einen Touchscreen. Um die Bodenbehandlungsmaschine in einem Notfall schnell ausschalten zu können ist auch ein gut erkennbarer Not-aus-Schalter vorgesehen.

Die Zeichnungen erläutern die Erfindung anhand eines Ausführungsbeispieles auf das sie aber nicht eingeschränkt ist. Dabei zeigt
- Fig. 1: eine perspektivische Darstellung einer automatischen Reinigungsmaschine,
- Fig. 2: eine seitliche Ansicht einer automatischen Reinigungsmaschine,
- Fig. 3: eine Darstellung gemäss Fig. 1 aber mit aufgeschwenkter Gehäusefront,
- Fig. 4: eine perspektivische Darstellung der aufschwenkbaren Gehäusefront,
- Fig. 5: eine Untersicht der automatischen Reinigungsmaschine,
- Fig. 6: eine schematische Zusammenstellung der wichtigsten Elemente der Steuerung, der Sensoren und des Antriebs der automatischen Reinigungsmaschine,
- Fig. 7 bis 12: schematische Darstellungen zur Bodenbehandlung, welche ein Beispiel eines möglichen Fahrweges anhand von zeitlich nacheinander folgenden Darstellungen des zu den jeweiligen Zeitpunkten gefahrenen Weges erläutern,
- Fig. 13: ein Flussdiagram zur Bodenbehandlung gemäss den Fig. 7 bis 12,
- Fig. 14: in einem Koordinatensystem dargestellte, in einem Erfassungsmodus aus Distanzmessungen des Scan-Sensors und Fahrinformationen der Antriebsräder zu Positionierungsbereichen bestimmte Liniensegmente, und
- Fig. 15: in einem Koordinatensystem dargestellte Liniensegmenten gemäss Fig. 14 und den Liniensegmenten überlagerte an einer eingezeichneten Position der Bodenbehandlungsmaschine erfasste Distanzpunkte und die durch die Distanzpunkte legbaren Linien von aktuell vorliegenden Elementen.

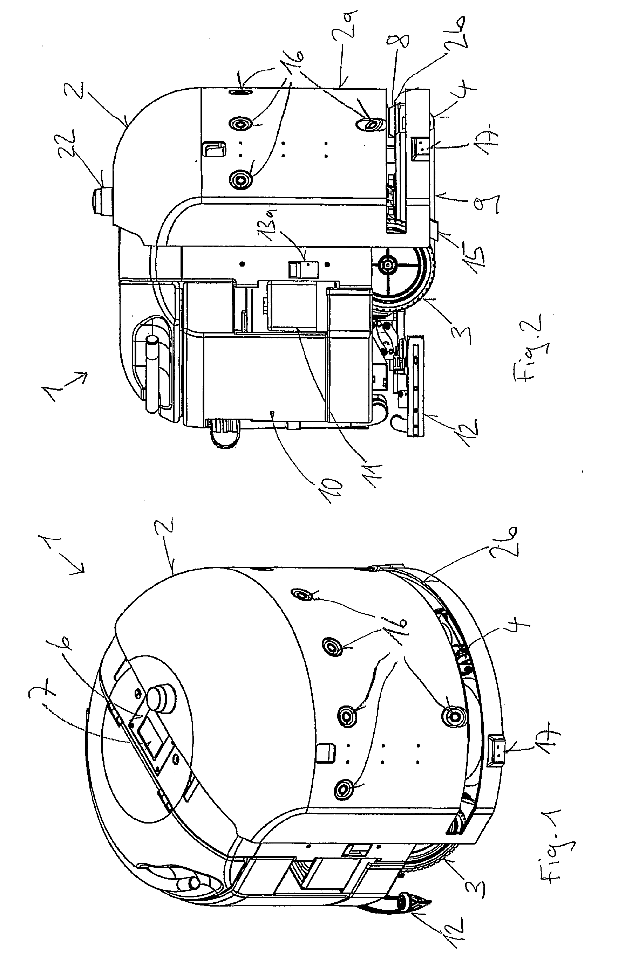

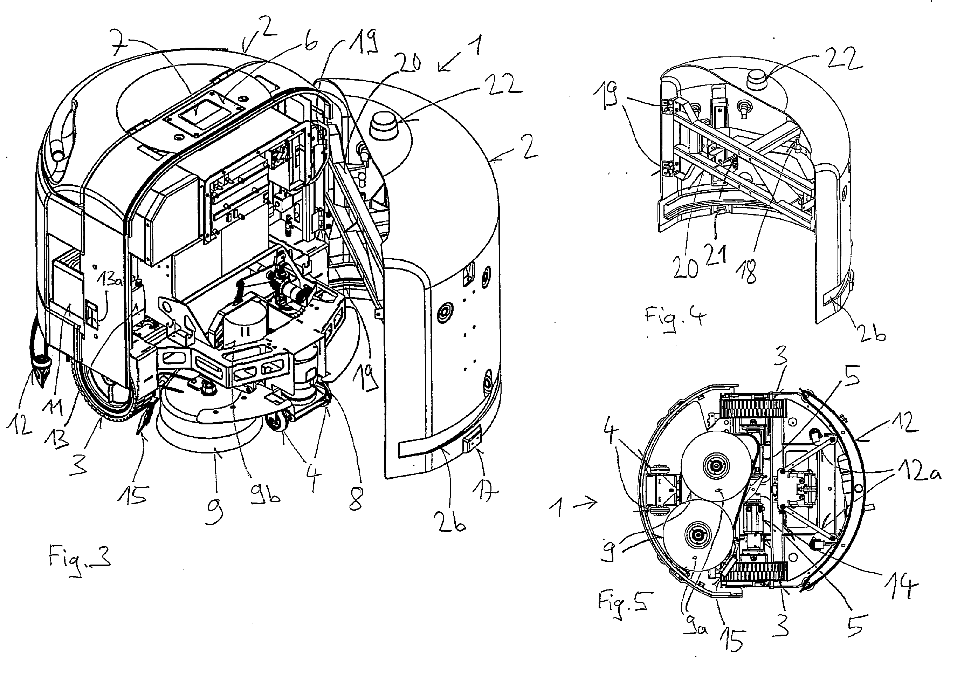

Fig. 1 bis 3 und 5 zeigen als Beispiel einer Bodenbehandlungsmaschine eine Reinigungsmaschine 1 zum Behandeln von Bodenflächen, mit einem Gehäuse 2, zwei Antriebsrädern 3, zwei schwenkbaren Stützrädern 4, einer Antriebsvorrichtung 5 mit je einem Motor pro Antriebsrad 3, einer Steuerung 6 mit einer Anzeige- und Eingabeeinrichtung 7 in der Form eines Touchscreens, mindestens einem Scan-Sensor 8, der in einer im Wesentlichen horizontalen Ebene über einen vorgegebenen Winkelbereich Distanzmessungen durchführbar macht, und mit einer Bodenbehandlungseinrichtung 9, die in einem Behandlungsbereich mit einer vorgegebenen Lage relativ zu den Rädern 3, 4 sowie mit einer Behandlungsbreite senkrecht zur Fahrrichtung eine Behandlung des Bodens erzielbar macht.

Die Bodenbehandlungseinrichtung 9 der dargestellten Reinigungsmaschine umfasst zwei oder drei um seitlich versetzt angeordnete vertikale Achsen drehende auswechselbare Bürsten oder Pads 9a. Die Bürsten 9a werden von einem Bürstenantrieb 9b in Drehung versetzt. Mit einer nicht dargestellten Reinigungsflüssigkeitszuführung wird im Bereich der Bürsten 9a mit einer Pumpe Reinigungsflüssigkeit aus einem ersten Tank 10 zugeführt. Aus einem zweiten Tank 11 kann Reinigungsmittel in die Reinigungsflüssigkeit eingebracht werden. Nach der Bodenbehandlung durch die Bürsten 9a wird die auf dem Boden zurückbleibende Reinigungsflüssigkeit von einer Absauganordnung 12 abgesaugt und dem ersten Tank 10 zugeführt. Um auf ein häufiges Auswechseln der Reinigungsflüssigkeit verzichten zu können, ist dem ersten Tank eine Membrane zugeordnet, welche unerwünschte Anteile im ersten Tank 10 zurückhält. Die elektrische Energie aller elektrisch betriebenen Komponenten stammt von mindestens einer aufladbaren Batterie 13, die über einen Stecker 13a mit einem Ladegerät verbindbar ist. Die Absauganordnung 12 ist vorzugsweise über eine Nachführverbindung 12a etwas schwenkbar am Fahrgestell 14 angeordnet, so dass die Absauganordnung 12 auch bei Kurvenfahrten immer dem feuchten Bodenbereich zugeordnet ist.

Weil die Bürsten 12 bezüglich einer zentralen Achse in Fahrrichtung der Reinigungsmaschine etwas auf eine Seite versetzt angeordnet sind, erfolgt die Reinigung auf dieser Seite im Wesentlichen bis in den Bereich mit dem Antriebsrad 3. Damit die Antriebswirkung des Antriebsrads 3 von der Reinigungsflüssikeit nicht beeinträchtigt wird, lenkt ein Abstreifer 15 die Reinigungsflüssigkeit gegen das Zentrum der Reinigungsmaschine 1 ab.

Damit auch Hindernisse oder Bodenberandungen erfasst werden, welche sich nicht über den Höhenbereiche mit dem Scan-Sensor 8 erstrecken, werden vorzugsweise auch andere Sensoren für die Hinderniserkennung eingesetzt. In der dargestellten Ausführungsform sind mehrere Ultraschallsensoren 16 im vorderen Bereich des Gehäuses 2 angeordnet, wobei die Anordnung auf zwei verschiedenen Höhen und die Möglichkeit Ultraschallpulse bei einem beliebigen Ultraschallsensoren 16 auszusenden und bei einem beliebigen Ultraschallsensoren 16 zu empfangen eine gute Erfassung von Hindernissen gewährleistet, welche sich in einem Abstand vom Boden gegen das Innere der Bodenfläche erstrecken. Mit zwei je seitlich vorne angeordneten, gegen den Boden gerichteten Infrarotsensoren 17 werden Hindernisse im Boden, insbesondere Stufen, erfasst.

Zur Hinderniserkennung ist auch mindestens ein Kontaktsensor 18 in der Form eines Auslenkungssensors vorgesehen, welcher zwischen dem Fahrgestell 14 und einem in Fahrrichtung vorne liegenden Gehäusebereich 2a angeordnet ist. Wenn nun ein Hindernis mit dem vorne liegenden Gehäusebereich 2a in Kontakt kommt, wird der Gehäusebereich 2a vom Hindernis relativ zum Fahrgestell 14 ausgelenkt, was der Auslenkungssensor erfasst.

Um für Wartungsarbeiten einfach zum Innern der Reinigungsmachine Zugang zu erhalten ist das Fahrgestell 14 über eine Schwenkverbindung 19 mit einer Gehäusehalterung 20 zum Halten des vorne liegenden Gehäusebereichs 2a verbunden. Zwischen der Gehäusehalterung 20 und dem vorne liegenden Gehäusebereich 2a sind Federverbindungen 21 angeordnet, welche den vorne liegenden Gehäusebereich 2a in einer Gleichgewichtslage halten, aus der dieser bei einem Kontakt zu einem Hindernis ausgelenkt wird, wobei der Kontaktsensor 18 zwischen der Gehäusehalterung 20 und dem vorne liegenden Gehäusebereich 2a diese Auslenkung erfasst. Damit der Scan-Sensor 8 im Scan-Bereich eine freie Sicht hat, weist der Gehäusebereich 2a einen Durchlassschlitz 2b auf. Auf der Oberseite des Gehäuses 2 ist eine Warnlampe und/oder ein Not-aus-Schalter 22 angeordnet.

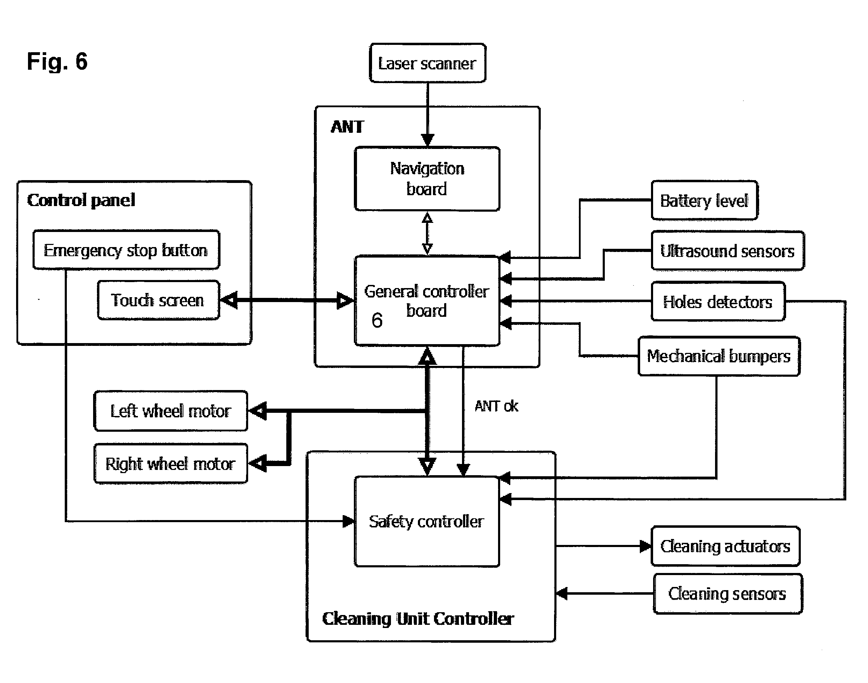

Fig. 6 zeigt, dass die Steuerung 6 im Wesentlichen mit allen Sensoren und Antrieben verbunden ist. Für die Navigation ist die Steuerung 6 (General controller board) mit einem "Navigation board" verbunden, welches in der dargestellten Ausführungsform direkt mit dem Scan-Sensor "Laser scanner" verbunden ist. Es versteht sich von selbst, dass auch Navigationslösungen verwendet werden können, welche ohne Scan-Sensor funktionieren (beispielsweise Positionierung mit Totalstationen oder Laser-Trackern), wobei dann der Scan-Sensor "Laser scanner" für die Hinderniserkennung direkt an der Steuerung 6 angeschlossen ist.

Für die Hinderniserkennung ist die Steuerung 6 mit mindestens einem Sensor aus der Gruppe Scan-Sensor "Laser scanner", Ultraschallsensor "Ultrasound sensors", Infrarotsensor "Holes detectors", Kontaktsensor "Mechanical bumpers" verbunden. Wenn ein Hindernis bzw. eine Notsituation nur mit dem Kontaktsensor "Mechanical bumpers", dem Infrarotsensor "Holes detectors" oder dem Not-aus-Schalter erkannt wird, so ist es vorteilhaft, wenn diese Elemente direkt mit einer Sicherheitssteuerung "Safety controller" verbunden sind, welche einen sofortigen Stopp der Antriebsräder auslösen kann, um einen Schaden zu verhindern. Die Sicherheitssteuerung und die Steuerung 6 sind miteinander und mit der Antriebsvorrichtung verbunden, wobei die Antriebsvorrichtung vorzugsweise für beide Antriebsräder je einen Motor umfasst.

Die Steuerung 6 ist mit der Anzeige- und Eingabeeinrichtung "Touchscreen" verbunden. In der dargestellten Ausführungsform ist die Steuerung der Bodenbehandlungseinrichtung 9 in einer Reinigungssteuerung "Cleaning unit controller" angeordnet, welche mit der Steuerung 6 und den Betätigungselementen "Cleaning actuators" und Sensoren "Cleaning sensors" der Bodenbehandlungseinrichtung 9 verbunden ist.

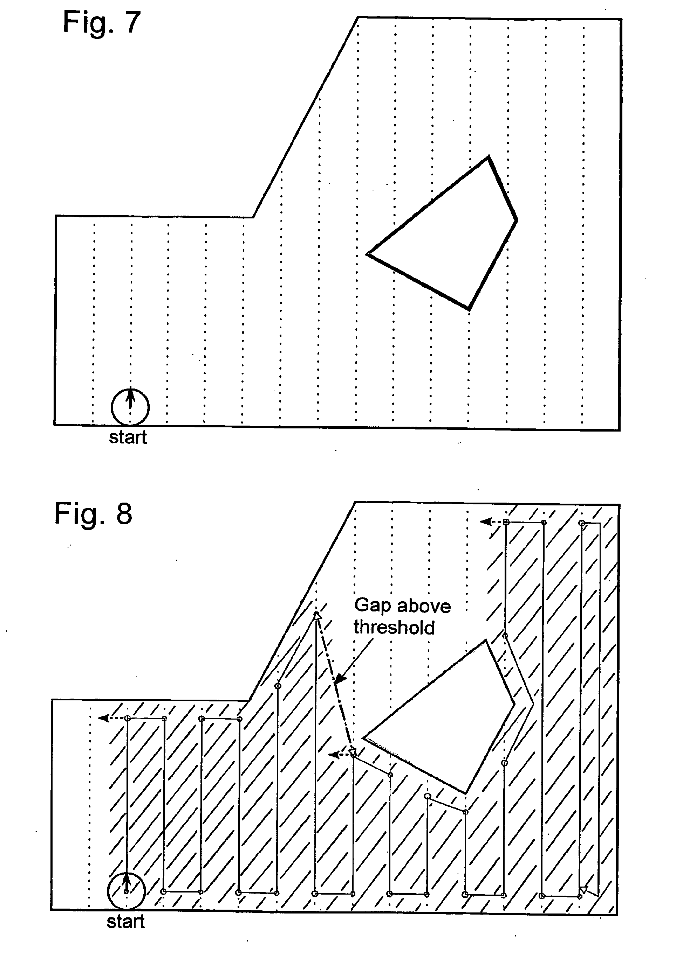

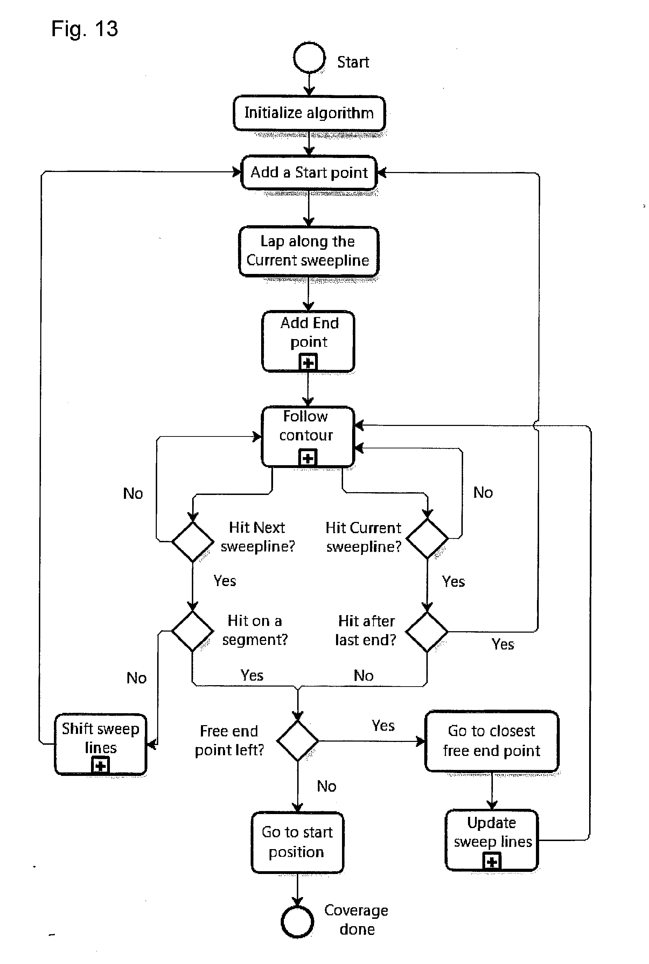

Fig. 7 bis 12 beschreiben anhand eines Beispiels die wesentlichen Schritte und die zu speichernden Informationen eines möglichen Fahrweges, wobei die Figuren zeitlich nacheinander folgende Situationen der Bodenbehandlung darstellen. Das Flussdiagram der Fig. 13 fasst die für die Fahrwege minimal nötigen Kontrollen, Entscheidungen und Fahrschritte zusammen.

Am Anfang der Bodenbehandlung bzw. eines Fahrweges (Fig. 7) wird die gewünschte Behandlungsrichtung mit vorwärts und rückwärts Orientierung festgelegt, vorzugsweise durch die Positionierung und Ausrichtung der Bodenbehandlungsmaschine beim Start des Behandlungsmodus. Dazu kann beispielsweise festgelegt werden, dass die Bodenbehandlungsmaschine ausgerichtet auf einer Fahrlinie steht und die vorwärts Orientierung der Behandlungsrichtung nach rechts gerichtet senkrecht zur Fahrlinie verläuft. Auf dem Fahrweg müssen für Kontrollen, Entscheidungen und zu speichernde Werte Informationen zu drei nebeneinander liegenden Fahrlinien bereitgestellt werden können. Die Fahrlinien (gepunktete Linien in Fig. 7) liegen mit vorgegebenen Abständen nebeneinander und sind vorzugsweise als Geraden bzw. mit Geradengleichungen im Bodenkoordinatensystem festgelegt.

Wenn die Bodenbehandlungsmaschine im Behandlungsmodus auf einer Fahrlinie unterwegs ist, so werden diese Fahrlinie und die beidseits angeordneten Fahrlinien geordnet in der vorwärts Orientierung der Behandlungsrichtung als vorgängige, aktuelle und nächste Fahrlinie bezeichnet. Auf dem Fahrweg fährt die Bodenbehandlungsmaschine Wegsegmente auf den Fahrlinien von Anfangspunkten zu Endpunkten, wobei die Fahrrichtung der aneinander anschliessenden Wegsegmente auf verschiedenen Fahrlinien immer in entgegengesetzter Richtung festgelegt ist. Die Endpunkte werden festgelegt, wenn das Weiterfahren auf der jeweiligen Fahrlinie aufgrund eines Hindernisses nicht möglich ist. Die Anfangspunkte werden festgelegt als Punkte auf einer Fahrlinie bei der die Bodenbehandlungsmaschine mit dem Befahren eines Wegsegmentes auf dieser Fahrlinie beginnt. Durch das Speichern der Koordinaten der Anfangs- und Endpunkte kann der behandelte Bereich der Bodenfläche festgehalten werden.

Nach dem in Fig. 13 aufgeführten Initialisierungsschritt "Initialize algorithm" mit der Festlegung der Behandlungsrichtung wird der Ausgangspunkt als Startpunkt "Add a Start point" festgelegt und gespeichert. In Fig. 8 sind die Startpunkte als gefüllte Punkte dargestellt. Ausgehend vom ersten Startpunkt wird das erste Wegsegment auf der aktuellen Fahrlinie gefahren, was in Fig. 13 mit "Lap along the Current sweepline" bezeichnet ist. Beim Auftreffen auf ein Hindernis wird ein Endpunkt auf der aktuellen Fahrlinie festgelegt und gespeichert, was in Fig. 13 mit "Add End point" und in Fig. 8 mit kreisförmigen Punkten dargestellt ist. Zum Speichern des Endpunktes gehört nebst den Koordinaten des Endpunktes auch das Bestimmen und Speichern eines der Zustände "vollständig behandelt" oder "unvollständig behandelt" und bei "unvollständig behandelt" zusätzlich das Speichern einer Richtungsinformation, wobei aus der Richtungsinformation hervorgeht, in welcher Richtung ausgehend vom entsprechenden Endpunkt unvollständig behandelte Bereiche vorliegen.

Wenn in der zur aktuellen Orientierung der Behandlungsrichtung entgegengesetzten Richtung noch ein nicht behandelter Bereich der Bodenfläche angefahren werden kann, liegt die Distanz vom aktuellen Endpunkt zum nächstliegenden Anfangspunkt auf der vorgängigen Fahrlinie über einem vorgegebenen Durchfahrabstand, welcher im Wesentlichen der minimal benötigten Breite eines von der Bodenbehandlungsmachine befahrbaren Bereichs entspricht. Ausgehend vom Endpunkt des ersten Wegsegments in Fig. 8 wird auf der vorgängigen Fahrlinie kein Anfangspunkt gefunden, weil ja die vorgängige Fahrlinie nicht befahren wurde. Der Abstand vom ersten Endpunkt zu einem nicht vorhandenen Punkt wird grösser als der vorgegebene Durchfahrabstand festgelegt und entsprechend wird zum ersten Endpunkt der Zustand "unvollständig behandelt" gespeichert mit der Angabe, dass der noch nicht behandelte Bereich vom aktuellen Endpunkt mit einer der aktuellen Orientierung der Behandlungsrichtung entgegen gesetzten Reinigungsrichtung angefahren werden muss, was in Fig. 8 mit dem nach links zeigenden Pfeil beim ersten Endpunkt dargestellt ist.

Das bei einem Endpunkt angetroffene Hindernis löst jeweils eine Konturfolgebewegung aus, die in Fig. 13 mit "Follow contour" bezeichnet ist. Die Bodenbehandlungsmaschine folgt während der Konturfolgebewegung dem Hindernis in Richtung der jeweils aktuellen Orientierung der Behandlungsrichtung, bis sie auf die aktuelle oder die nächste Fahrlinie trifft. Dies ist in Fig. 13 mit "Hit Current sweepline?" bzw. "Hit Next sweepline?" bezeichnet. Dort wo die Konturfolgebewegung auf eine noch nicht befahrene Stelle einer Fahrlinie trifft, wird ein neuer Anfangspunkt festgelegt (Fig. 13, "Add a Start point"). Wenn der neue Anfangspunkt auf der aktuellen Fahrlinie, bzw. auf der vor der Konturfolgebewegung befahrenen, Fahrlinie liegt, so wird die Fahrrichtung dieser aktuellen Fahrlinie beibehalten. Wenn der neue Anfangspunkt - bezogen auf die vor der Konturfolgebewegung befahrene Fahrlinie - auf der nächsten Fahrlinie liegt, so wird diese nächste Fahrlinie zur aktuellen Fahrlinie und die Fahrrichtung ist gegenüber der vorgängigen Fahrlinie um 180° gedreht, bzw. entgegengesetzt gerichtet. Zudem wird die Fahrlinie vor der Konturfolgebewegung zur vorgängigen Fahrlinie und eine neue nächste Fahrlinie wird bestimmt, was in Fig. 13 mit "Shift sweep lines" bezeichnet ist.

Gemäss Fig. 8 trifft die Bodenbehandlungsmachine bei den an die ersten 10 Endpunkte anschliessenden Konturfolgebewegung immer auf eine nächste Fahrlinie und entsprechend haben die aufeinander folgenden Wegsegmente auf den Fahrlinien immer entgegengesetzte Fahrrichtungen. Die Endpunkte sind zuerst durch die Berandung der Bodenfläche gegeben. Entsprechend sind die Abstände zwischen den Endpunkten und dem jeweils nächstgelegenen Anfangspunkt auf der jeweils vorgängigen Fahrlinie kleiner als der vorgegebene Durchfahrabstand, so dass an diesen Endpunkten der Zustand "vollständig behandelt" gespeichert wird. Der siebte Endpunkt ist durch ein schwarz eingezeichnetes Hindernis auf dem Innern der Bodenfläche gegeben. Bei diesem siebten Endpunkt ist der Abstand zum nächstgelegenen Anfangspunkt auf der vorgängigen Fahrlinie grösser als der vorgegebene Durchfahrabstand, was mit "Gap above threshold" bezeichnet ist. Entsprechend wird zum siebten Endpunkt der Zustand "unvollständig behandelt" gespeichert mit der Angabe, dass der noch nicht behandelte Bereich vom aktuellen Endpunkt mit einer der aktuellen Orientierung der Behandlungsrichtung entgegen gesetzten Reinigungsrichtung angefahren werden muss, was in Fig. 8 mit dem nach links zeigenden Pfeil beim siebten Endpunkt dargestellt ist.

Ausgehend vom elften Endpunkt trifft die Konturfolgebewegung nach dem schwarz eingezeichneten Hindernis wieder auf die aktuelle Fahrlinie. Das neue Wegsegment führt entsprechend auf der aktuellen Fahrlinie bis zum nächsten bzw. zwölften Endpunkt. Bei diesem zwölften Endpunkt ist der Abstand zum nächstgelegenen Anfangspunkt auf der vorgängigen Fahrlinie grösser als der vorgegebene Durchfahrabstand. Entsprechend wird zum zwölften Endpunkt der Zustand "unvollständig behandelt" mit der Richtungsinformation gemäss dem in Fig. 8 nach links zeigenden Pfeil gespeichert.

Die an den vierzehnten Endpunkt anschliessende Konturfolgebewegung trifft nur auf ein bereits behandeltes Wegsegment. Ein noch nicht befahrener Abschnitt einer Fahrlinie kann nicht gefunden werden. Daraus geht hervor, dass die erste Gruppe von nebeneinander verlaufenden Wegabschnitten abgeschlossen ist.

Alle entstehenden Gruppen von nebeneinander verlaufenden Wegabschnitten werden nacheinander behandelt, indem immer am Ende einer solchen Gruppe ein Endpunkt mit dem Zustand "unvollständig behandelt" gesucht und mit einer Positionssuchbewegung angefahren wird. Vorzugsweise wird der nächstliegende Endpunkt mit dem Zustand "unvollständig behandelt" gewählt, was in Fig. 13 mit "Go to closest free end point" bezeichnet ist. Fig. 13 stellt diese iterative Bearbeitung mit der Bezeichnung "Is free end point left" dar. An einem Endpunkt mit dem Zustand "unvollständig behandelt" wird jeweils eine aktuelle, eine vorgängige und eine nächste Fahrlinie festgelegt (Fig. 13, "Update sweep lines") und von diesem Endpunkt aus in die zum Endpunkt gespeicherte Richtung eine neue Gruppe von nebeneinander verlaufenden Wegabschnitten in Angriff genommen bis kein Endpunkt mit dem Zustand "unvollständig behandelt" mehr vorhanden ist. Dann ist die ganze Bodenfläche behandelt und die Bodenbehandlungsmaschine geht an den Ausgangspunkt (erster Startpunkt). In Fig. 13 ist dies mit ""Go to start position" und "Coverage done" bezeichnet.

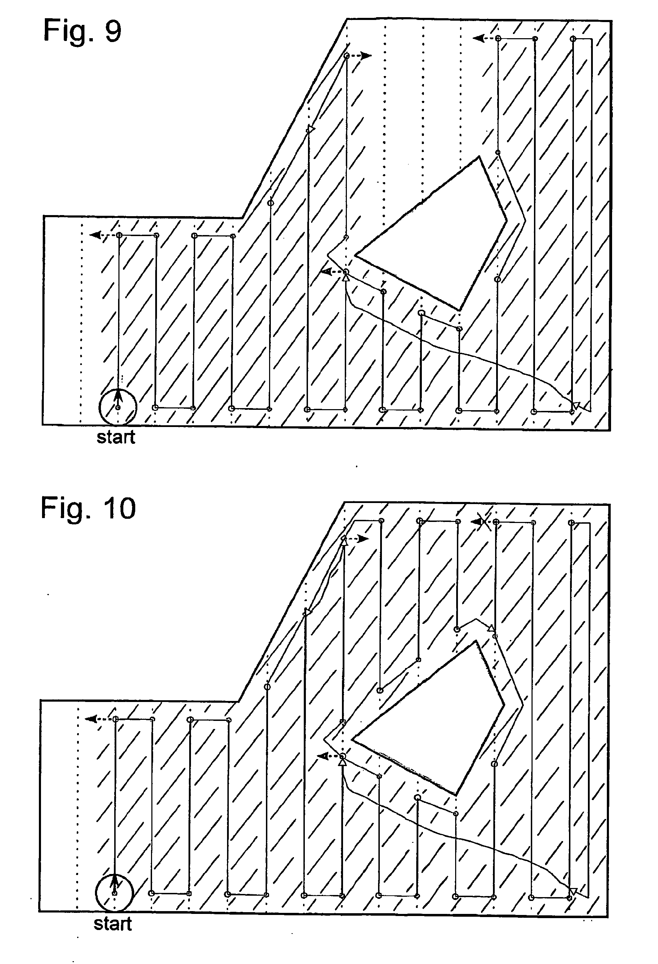

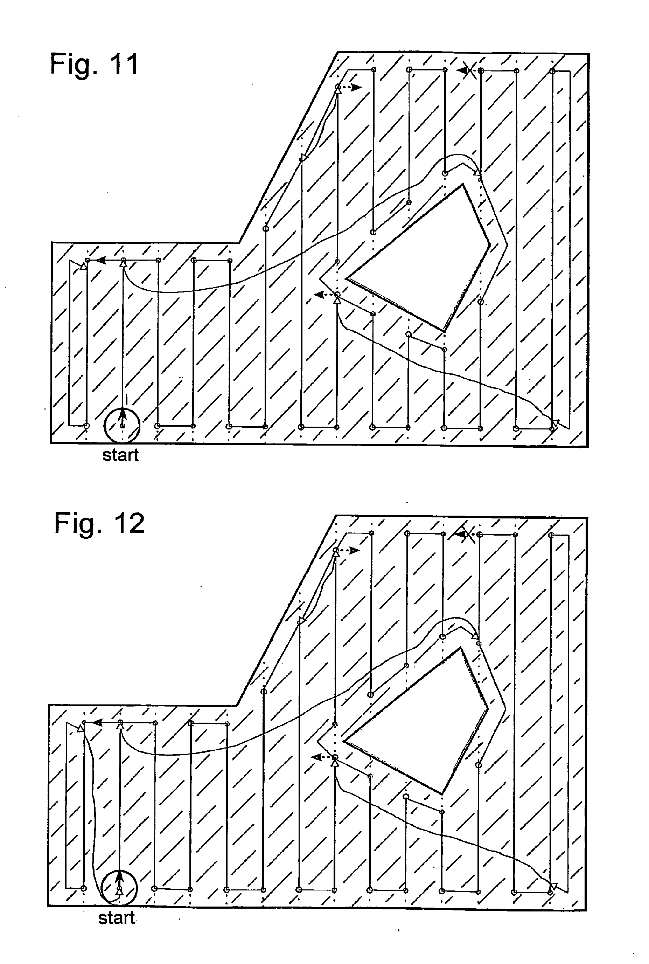

Das Befahren der weiteren Gruppen von nebeneinander verlaufenden Wegabschnitten ist in den Fig. 9 bis 12 dargestellt. In Fig. 9 ist dargestellt, wie ausgehend vom siebten Endpunkt die Konturfolgebewegung mit der nach links eingezeichneten Orientierung der Behandlungsrichtung nach dem schwarz eingezeichneten Hindernis wieder auf die aktuelle Fahrlinie trifft. Das neue Wegsegment führt entsprechend auf der aktuellen Fahrlinie bis zum nächsten Endpunkt, bei dem der Abstand zum nächstgelegenen Anfangspunkt auf der rechts liegenden bzw. vorgängigen Fahrlinie grösser ist als der vorgegebene Durchfahrabstand. Entsprechend wird zu diesem Endpunkt der Zustand "unvollständig behandelt" mit der Richtungsinformation gemäss dem in Fig. 9 nach rechts zeigenden Pfeil gespeichert. Nach der anschliessenden Konturfolgebewegung trifft die Bodenbehandlungsmachine auf ein bereits behandeltes Wegsegment und geht gemäss Fig. 10 zum nächstgelegenen Endpunkt mit dem Zustand "unvollständig behandelt". Von dort aus wird der Bereich über dem schwarz eingezeichneten Hindernis behandelt und weil die letzte Konturfolgebewegung auf eine nächste Fahrlinie, trifft die schon mit der gleichen Orientierung der Behandlungsrichtung behandelt wurde, kann gemäss Fig. 11 der Zustand des am oberen Ende liegenden Endpunkts auf "vollständig behandelt" umgestellt werden und der letzte Endpunkt mit dem Zustand "unvollständig behandelt", nämlich der erste Endpunkt, angefahren werden. Fig. 12 zeigt, dass nach der Behandlung des Bodenbereichs rechts vom Ausgangspunkt der Bodenbehandlung die gesamte Bodenfläche behandelt ist.

Die Positionssuchbewegungen zwischen den Gruppen von nebeneinander liegenden Wegsegmenten sind in den Fig. 9 bis 12 jeweils mit handgezeichneten Linien dargestellt. Für den anzufahrenden Punkt wird jeweils ein zweckmässiger Weg zwischen Anfangs- und Endpunkten durch berechnet, wobei beim Auftreffen auf Hindernisse diese umfahren werden.

Um die vollständige Behandlung einer Bodenfläche zu gewährleisten müssen nur wenige Daten, nämlich die Anfangs- und Endpunkte der befahrenen Wegsegmente und ein Behandlungszustand mit Richtungsinformation bei den Endpunkten gespeichert werden. Zudem muss bis auf die wenigen grob zu berechnenden Positionssuchbewegungen kein Fahrweg geplant werden, was zu einem minimalen Rechenaufwand führt.

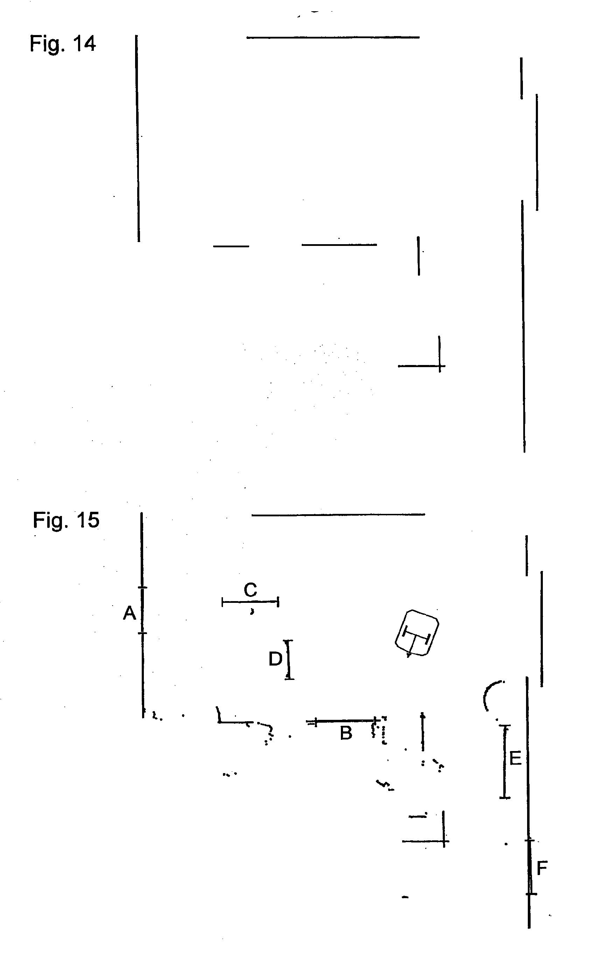

Fig. 14 und 15 stellen Schritte dar, die von einer Ausführungsform durchgeführt werden, welche auf ortsfeste Komponenten der Positions- und Ausrichtungs-Erfassungseinrichtung verzichtet. Der Bodenfläche sind einzelne feste Elemente, wie die Bodenfläche berandende Wandabschnitte oder auf der Bodenfläche angeordnete Elemente, Säulen, innere Wandabschnitte oder feste Regale zugeordnet, welche als Positionierungsbereiche verwendet werden.

Um eine Positions- und Ausrichtungsbestimmung zu ermöglichen, umfasst die Steuerung der Bodenbehandlungsmaschine einen Erfassungsmodus, bei dem aus Distanzmessungen des Scan-Sensors und Fahrinformationen der Antriebsräder die in Fig. 14 auf einem der Bodenfläche zugeordneten Boden-Koordinatensystem dargestellten Positionierungsbereiche bestimmt werden. Bevor eine Bodenfläche von der Bodenbehandlungsmaschine behandelt werden kann, muss die Bodenbehandlungsmaschine im Erfassungsmodus über verschiedene Bereiche der Bodenfläche geführt werden, damit sie Positionierungsbereiche erfassen kann. Zum Erfassen der Positionierungsbereiche bestimmt der Erfassungsmodus Liniensegmente im Boden-Koordinatensystem, wobei die bestimmten Liniensegmente gemessene Distanzpunkte an den Positionierungsbereichen mit Parametern von Kurvengleichungen, vorzugsweise Geraden, als Abschnitte von kontinuierlichen Linien darstellen. Die dargestellten Abschnitte von Geraden können mit Winkeln zu einer Koordinatenachse und mit einer Positionsangabe sowie einer Längenangabe oder auch mit den Koordinaten der Endpunkte festgelegt werden.

Fig. 15 zeigt die Überlagerung von erfassten Positionierungsbereichen mit den für eine aktuelle Position erfassten Distanzmessungen des Scan-Sensors, wobei Distanzpunkte, die auf einer Linie, insbesondere einer Geraden liegen, mit Linienabschnitten A, B, C, D, E und F dargestellt sind. Aus der dargestellten Übereinstimmung der Linienabschnitten A, B und F mit Positionierungsbereichen kann im Behandlungsmodus die Position und Ausrichtung der Bodenbehandlungsmaschine im Boden-Koordinatensystem bestimmt werden. Die Linienabschnitte C, D und E stammen von variablen Elementen (Hindernissen), die bei der Durchführung des Erfassungsmodus nicht vorhanden waren. Gegebenenfalls werden für die Bestimmung einer aktuellen Position und Ausrichtung der Bodenbehandlungsmaschine auch Fahrinformationen der Antriebsräder verwendet. Alle Informationen die zur Positionsbestimmung verwendet werden können, werden vorzugsweise mittels Karman-Filtertechnik zu einer Positions- und Ausrichtungsbestimmung mit Fehlerabschätzung umgerechnet. Ausgehend von einer genauen Positionsbestimmung, die aus einer guten Übereinstimmung von beispielsweise mindestens zwei Positionierungsbereichen und den für eine aktuelle Position erfassten entsprechenden Distanzmessungen hervorgeht, kann mit der Verfolgung des Fahrweges, bzw. mit der Fahrinformation der Antriebsräder, auch auf der Weiterfahrt eine relativ genaue Position und Ausrichtung bestimmt werden, selbst wenn auf der Weiterfahrt keine Positionierungsbereiche sichtbar sind.

## Patentansprüche

1. Bodenbehandlungsmaschine (1) zum Behandeln von Bodenflächen, mit einem Gehäuse (2), zwei Antriebsrädern (3), mindestens einem Stützrad (4), einer Antriebsvorrichtung (5), einer Steuerung (6), mindestens einer Hindernis-Erkennungseinrichtung und mit einer Bodenbehandlungseinrichtung (9), die in einem Behandlungsbereich mit einer vorgegebenen Lage relativ zu den Rädern (3, 4) sowie mit einer Behandlungsbreite senkrecht zur Fahrrichtung eine Behandlung des Bodens erzielbar macht, wobei die Steuerung (6) einen Behandlungsmodus aufweist,
der Behandlungsmodus eine zu behandelnde Fläche mit dem Behandlungsbereich der Behandlungsmaschine durch Gruppen von nebeneinander verlaufenden Wegabschnitten überstreichbar macht, wobei die Position und Ausrichtung der Bodenbehandlungsmaschine im Boden-Koordinatensystem von einer Positions-Erfassungseinrichtung bereitgestellt werden,
**dadurch gekennzeichnet, dass**
der Behandlungsmodus
eine Behandlungsrichtung mit vorwärts und rückwärts Orientierung festlegbar macht,
Fahrlinien senkrecht zur Behandlungsrichtung in Abständen vorgibt, wobei die Abstände so gewählt sind, dass bei Fahrten in entgegengesetzten Richtungen auf nebeneinander liegenden Fahrlinien der Bereich zwischen den Fahrlinien vom Behandlungsbereich vollständig behandelt wird,
auf den Fahrlinien Wegsegmente von Anfangspunkten zu Endpunkten jeweils in einer Fahrrichtung fahrbar macht, wobei die Fahrrichtungen auf benachbarten Fahrlinien je entgegengesetzt ausgerichtet sind,
die Endpunkte dadurch festlegt, dass das Weiterfahren auf der jeweiligen Fahrlinie aufgrund eines von der Hindernis-Erkennungseinrichtung erfassten Hindernisses nicht möglich ist,
zu den Endpunkten jeweils den Anfangspunkt sowie den Endpunkt des abgefahrenen Wegsegmentes, zumindest einen der Zustände "vollständig behandelt" oder "unvollständig behandelt" und zumindest bei "unvollständig behandelt" auch eine Richtungsinformation in einem Wegsegmentspeicher speichert, wobei aus der Richtungsinformation hervorgeht in welcher Orientierung der Behandlungsrichtung ausgehend vom entsprechenden Endpunkt unvollständig behandelte Bereiche vorliegen, und
bei den Endpunkten zum Finden jeweils neuer Anfangspunkte eine Konturfolgebewegung auslösbar macht, bei der die Bodenbehandlungsmaschine dem Hindernis folgt, bis sie auf eine Fahrlinie trifft, wobei die Konturfolgebewegung in Richtung der jeweils aktuellen Orientierung der Behandlungsrichtung beginnt,
beim Treffen der vor der Konturfolgebewegung befahrenen Fahrlinie auf einem gemäss Wegsegmentspeicher noch nicht abgefahrenen Wegsegment dort ein neuer Anfangspunkt festgelegt sowie die Fahrrichtung dieser Fahrlinie gewählt wird,
beim Treffen einer benachbarten Fahrlinie auf einem gemäss Wegsegmentspeicher noch nicht abgefahrenen Wegsegment dort ein neuer Anfangspunkt festgelegt sowie die Fahrrichtung dieser benachbarten Fahrlinie gewählt wird,
beim Treffen einer Fahrlinie auf einem gemäss Wegsegmentspeicher bereits abgefahrenen Wegsegment das Ende einer Gruppe von nebeneinander verlaufenden Wegabschnitten festgestellt wird, wobei die Steuerung dann im Wegsegmentspeicher einen Endpunkt mit dem Zustand "unvollständig behandelt" sucht und mit einer Positionssuchbewegung anfährt, um von diesem Endpunkt aus in die zum Endpunkt gespeicherte Orientierung der Behandlungsrichtung eine neue Gruppe von nebeneinander verlaufenden Wegabschnitten in Angriff zu nehmen bis kein Endpunkt mit dem Zustand "unvollständig behandelt" mehr vorhanden ist.

2. Bodenbehandlungsmaschine (1) nach Anspruch 1, **dadurch gekennzeichnet, dass** der Behandlungsmodus den einem aktuellen Endpunkt zuzuordnenden Zustand "vollständig behandelt" oder "unvollständig behandelt" anhand der Distanz vom aktuellen Endpunkt zum nächstgelegenen Anfangspunkt auf einer Fahrlinie, die in der zur aktuellen Orientierung der Behandlungsrichtung entgegengesetzten Orientierung direkt neben der Fahrlinie mit dem aktuellen Endpunkt liegt, bestimmbar macht, wobei bei einem Abstand über einem vorgegebenen Wert der Zustand "unvollständig behandelt" gewählt wird.

3. Bodenbehandlungsmaschine (1) nach Anspruch 1 oder 2, **dadurch gekennzeichnet, dass** sie mindestens einen Scan-Sensor (8) umfasst, der in einer im Wesentlichen horizontalen Ebene über einen vorgegebenen Winkelbereich Distanzmessungen durchführbar macht, und dass der Behandlungsmodus Hindernisse über Distanzmessungen des Scan-Sensors (8) erfassbar macht, wobei der Scan-Sensor (8) vorzugsweise vor den Antriebsrädern (3) im Wesentlichen im Höhenbereich der Antriebsräder (3) angeordnet ist.

4. Bodenbehandlungsmaschine (1) nach Anspruch 3, **dadurch gekennzeichnet, dass** die Bodenbehandlungsmaschine die Positions-Erfassungseinrichtung umfasst, wobei
die Steuerung in einem Erfassungsmodus aus Distanzmessungen des Scan-Sensors (8) und Fahrinformationen der Antriebsräder (3) das Erfassen von der Bodenfläche zugeordneten Positionierungsbereichen in einem der Bodenfläche zugeordneten Boden-Koordinatensystem durchführbar macht, wobei zum Erfassen der Positionierungsbereiche Liniensegmente im Boden-Koordinatensystem bestimmt werden und die bestimmten Liniensegmente gemessene Distanzpunkte der Positionierungsbereiche mit Parametern von Kurvengleichungen als Abschnitte von kontinuierlichen Linien darstellen, und
die Steuerung im Behandlungsmodus mit den im Erfassungsmodus bestimmten Liniensegmenten und mit den zur aktuellen Position erfassten Distanzmessungen des Scan-Sensors (8) die Position und die Ausrichtung der Bodenbehandlungsmaschine bestimmbar macht, wobei vorzugsweise zusätzlich auch Fahrweg-Informationen von den beiden Antriebsrädern (3) verwendet werden und alle Informationen, insbesondere mittels Karman-Filtertechnik, zu einer Positions- und Ausrichtungsbestimmung mit Fehlerabschätzung umgerechnet werden.

5. Bodenbehandlungsmaschine (1) nach einem der Ansprüche 1 bis 4, **dadurch gekennzeichnet, dass** die Bodenbehandlungsmaschine (1) Ultraschallsensoren (16) und/oder Infrarotsensoren (17) umfasst, mit denen Hindernisse erfassbar sind, wobei der Behandlungsmodus Hindernisse über Messungen der Ultraschallsensoren (16) und/oder Infrarotsensoren (17) erfassbar macht und die Infrarotsensoren (17) vorzugsweise gegen den Boden gerichtet sind um Hindernisse im Boden, insbesondere Stufen, zu erfassen.

6. Bodenbehandlungsmaschine (1) nach einem der Ansprüche 1 bis 5, **dadurch gekennzeichnet, dass** die Bodenbehandlungsmaschine (1) mindestens einen Kontaktsensor (18) umfasst und der Behandlungsmodus die Hindernisse auch über Messungen des mindestens einen Kontaktsensors (18) erfassbar macht, wobei vorzugsweise mindestens ein Auslenkungssensoren zwischen einem Fahrgestell (14) und einem in Fahrrichtung vorne liegenden Gehäusebereich (2a) angeordnet ist und insbesondere das Fahrgestell (14) über eine Schwenkverbindung (19) mit einer Halterung (20) zum Halten des vorne liegenden Gehäusebereichs (2a) verbunden ist sowie zwischen der Halterung (20) und dem vorne liegenden Gehäusebereich (2a) Federverbindungen (21) angeordnet sind, welche den vorne liegenden Gehäusebereich (2a) in einer Gleichgewichtslage halten, aus der dieser bei einem Kontakt zu einem Hindernis ausgelenkt wird, wobei zum Erfassen dieser Auslenkung mindestens ein Auslenkungssensor zwischen der Halterung (20) und dem vorne liegenden Gehäusebereich (2a) angeordnet ist.

7. Bodenbehandlungsmaschine (1) nach einem der Ansprüche 1 bis 6, **dadurch gekennzeichnet, dass** die Hindernisse nebst den physischen Hindernissen auch virtuelle Hindernisse umfassen, wobei die virtuellen Hindernisse vor dem Start des Behandlungsmodus über die Steuerung (6) eingebbar und im Behandlungsmodus nicht überfahrbar sind und somit die gleiche Wirkung haben wie physische Hindernisse.

8. Bodenbehandlungsmaschine (1) nach einem der Ansprüche 1 bis 7, **dadurch gekennzeichnet, dass** die Behandlungsrichtung und die Fahrlinien senkrecht zur Behandlungsrichtung durch die Positionierung und Ausrichtung der Bodenbehandlungsmaschine beim Start des Behandlungsmodus festlegbar sind, vorzugsweise indem festgelegt ist, dass die Bodenbehandlungsmaschine ausgerichtet auf einer Fahrlinie steht und die vorwärts Orientierung der Behandlungsrichtung nach rechts gerichtet senkrecht zur Fahrlinie verläuft.

9. Bodenbehandlungsmaschine (1) nach einem der Ansprüche 1 bis 8, **dadurch gekennzeichnet, dass** die effektive Ausdehnung des Gehäuses (2) und/oder die effektive Lage des Behandlungsbereichs relativ zu den Rädern (3, 4) berücksichtigt wird und im Lichte der effektiven Distanzmessungen zu einem Hindernis eine möglichst genaue Vorbeifahrt und Führung des Behandlungsbereichs beim Hindernis erzielbar macht.

10. Bodenbehandlungsmaschine (1) nach einem der Ansprüche 1 bis 9, **dadurch gekennzeichnet, dass** die Bodenbehandlungseinrichtung (9) eine Reinigungseinrichtung ist, vorzugsweise mit mindestens einer Bürste (9a), einer Reinigungsflüssigkeitszuführung und einer Absauganordnung (12), gegebenenfalls aber mit einem Trockensauger, oder einem Sprühextraktionsgerät oder einer Kehrmaschine.

11. Verfahren zum Behandeln von Bodenflächen, mit einer Bodenbehandlungsmaschine (1) mit einem Gehäuse (2), zwei Antriebsrädern (3), mindestens einem Stützrad (4), einer Antriebsvorrichtung (5), einer Steuerung (6), mindestens einer Hindernis-Erkennungseinrichtung und mit einer Bodenbehandlungseinrichtung (9), die in einem Behandlungsbereich mit einer vorgegebenen Lage relativ zu den Rädern (3, 4) sowie mit einer Behandlungsbreite senkrecht zur Fahrrichtung eine Behandlung des Bodens erzielbar macht, wobei das Verfahren die Schritte eines Behandlungsmodus durchführt,
im Behandlungsmodus eine zu behandelnde Fläche mit dem Behandlungsbereich der Bodenbehandlungsmaschine (1) durch Gruppen von nebeneinander verlaufenden Wegabschnitten überstrichen wird, wobei die Position und Ausrichtung der Bodenbehandlungsmaschine (1) im Boden-Koordinatensystem von einer Positions-Erfassungseinrichtung bereitgestellt werden,
**dadurch gekennzeichnet, dass**
im Behandlungsmodus
eine Behandlungsrichtung mit vorwärts und rückwärts Orientierung festgelegt wird,
Fahrlinien senkrecht zur Behandlungsrichtung in Abständen vorgegeben werden, wobei die Abstände so gewählt sind, dass bei Fahrten in entgegengesetzten Richtungen auf nebeneinander liegenden Fahrlinien der Bereich zwischen den Fahrlinien vom Behandlungsbereich vollständig behandelt wird,
auf den Fahrlinien Wegsegmente von Anfangspunkten zu Endpunkten jeweils in einer Fahrrichtung gefahren werden, wobei die Fahrrichtungen auf benachbarten Fahrlinien je entgegengesetzt ausgerichtet sind,
die Endpunkte dadurch festgelegt werden, dass das Weiterfahren auf der jeweiligen Fahrlinie aufgrund eines von der Hindernis-Erkennungseinrichtung erfassten Hindernisses nicht möglich ist,
zu den Endpunkten jeweils der Anfangspunkt sowie der Endpunkt des abgefahrenen Wegsegmentes, zumindest einer der Zustände "vollständig behandelt" oder "unvollständig behandelt" und zumindest bei "unvollständig behandelt" auch eine Richtungsinformation in einem Wegsegmentspeicher gespeichert wird, wobei aus der Richtungsinformation hervorgeht in welcher Orientierung der Behandlungsrichtung ausgehend vom entsprechenden Endpunkt unvollständig behandelte Bereiche vorliegen,
bei den Endpunkten zum Finden jeweils neuer Anfangspunkte eine Konturfolgebewegung ausgelöst wird, bei der die Bodenbehandlungsmaschine dem Hindernis folgt, bis sie auf eine Fahrlinie trifft, wobei
die Konturfolgebewegung in Richtung der jeweils aktuellen Orientierung der Behandlungsrichtung beginnt,
beim Treffen der vor der Konturfolgebewegung befahrenen Fahrlinie auf einem gemäss Wegsegmentspeicher noch nicht abgefahrenen Wegsegment dort ein neuer Anfangspunkt festgelegt sowie die Fahrrichtung dieser Fahrlinie gewählt wird,
beim Treffen einer benachbarten Fahrlinie auf einem gemäss Wegsegmentspeicher noch nicht abgefahrenen Wegsegment dort ein neuer Anfangspunkt festgelegt sowie die Fahrrichtung dieser benachbarten Fahrlinie gewählt wird,
beim Treffen einer Fahrlinie auf einem gemäss Wegsegmentspeicher bereits abgefahrenen Wegsegment das Ende einer Gruppe von nebeneinander verlaufenden Wegabschnitten festgestellt wird, wobei die Steuerung dann im Wegsegmentspeicher einen Endpunkt mit dem Zustand "unvollständig behandelt" sucht und mit einer Positionssuchbewegung anfährt, um von diesem Endpunkt aus in die zum Endpunkt gespeicherte Orientierung der Behandlungsrichtung eine neue Gruppe von nebeneinander verlaufenden Wegabschnitten in Angriff zu nehmen bis kein Endpunkt mit dem Zustand "unvollständig behandelt" mehr vorhanden ist.

12. Verfahren nach Anspruch 11, **dadurch gekennzeichnet, dass** der Behandlungsmodus den einem aktuellen Endpunkt zuzuordnenden Zustand "vollständig behandelt" oder "unvollständig behandelt" anhand der Distanz vom aktuellen Endpunkt zum nächstgelegenen Anfangspunkt auf einer Fahrlinie, die in der zur aktuellen Orientierung der Behandlungsrichtung entgegengesetzten Orientierung direkt neben der Fahrlinie mit dem aktuellen Endpunkt liegt, bestimmt, wobei bei einem Abstand über einem vorgegebenen Wert der Zustand "unvollständig behandelt" gewählt wird.

13. Verfahren nach einem der Ansprüche 11 bis 13, **dadurch gekennzeichnet, dass** die Bodenbehandlungsmaschine (1) mindestens einen Scan-Sensor (8) umfasst, der in einer im Wesentlichen horizontalen Ebene über einen vorgegebenen Winkelbereich Distanzmessungen durchführbar macht, und dass im Behandlungsmodus die Hindernisse über Distanzmessungen des Scan-Sensors (8) und/oder über Distanzmessungen von Ultraschallsensoren (16) und/oder über Messungen von Infrarotsensoren (17) und/oder über Messungen von Kontaktsensoren (18) und/oder über vor dem Start des Behandlungsmodus eingegebene virtuelle Hindernisse erfasst werden.

14. Verfahren nach Anspruch 13, **dadurch gekennzeichnet, dass** die PositionsErfassung von der Bodenbehandlungsmaschine (1) durchgeführt wird, wobei
die Steuerung (6) in einem Erfassungsmodus aus Distanzmessungen des Scan-Sensors (8) und Fahrinformationen der Antriebsräder (3, 4) das Erfassen von der Bodenfläche zugeordneten Positionierungsbereichen in einem der Bodenfläche zugeordneten Boden-Koordinatensystem durchführt, wobei zum Erfassen der Positionierungsbereiche Liniensegmente im Boden-Koordinatensystem bestimmt werden und die bestimmten Liniensegmente gemessene Distanzpunkte der Positionierungsbereiche mit Parametern von Kurvengleichungen als Abschnitte von kontinuierlichen Linien darstellen, und
die Steuerung (6) im Behandlungsmodus mit den im Erfassungsmodus bestimmten Liniensegmenten und mit den zur aktuellen Position erfassten Distanzmessungen des Scan-Sensors die Position und die Ausrichtung der Bodenbehandlungsmaschine (1) bestimmt.

15. Computerprogrammprodukt, welches die Durchführung eines Verfahrens nach einem der Ansprüche 11 bis 14 auf einer programmgesteuerten Bodenbehandlungsmaschine (1) veranlasst.

## Claims

1. A floor treatment machine (1) for treating floor surfaces, comprising a housing (2), two drive wheels (3), at least one support wheel (4), a drive device (5), a controller (6), at least one obstacle-recognizing device and comprising a floor treatment device (9), which ensures that the floor can be treated in a treatment area comprising a predetermined location relative to the wheels (3, 4), as well as comprising a treatment width perpendicular to the driving direction, wherein the controller (6) encompasses a treatment mode,
the treatment mode ensures that a surface, which is to be treated, can be swept over by means of the treatment area of the treatment machine by groups of route sections, which run next to one another, wherein the position and orientation of the floor treatment machine in the floor coordinate system are provided by a position detection device,
**characterized in that**
the treatment mode
ensures that a treatment direction with a forwards and backwards orientation can be determined,
determins driving lines, which are spaced apart perpendicular to the treatment direction, wherein the distances are chosen such that, when driving in opposite directions on driving lines, which are located next to one another, the area between the driving lines is completely treated by the treatment area,
ensures that route segments on the driving lines can be driven from starting points to end points each in one driving direction, wherein the driving directions on adjacent driving lines are oriented in opposite direction,
determines the end points **in that** driving cannot be continued on the respective driving line due to an obstacle, which is detected by the obstacle recognition device,
stores in a route segment storage the starting point as well as the end point of the route segment, which was followed, and for the end points, at least one of the states "completely treated" or "incompletely treated" and also a direction information, at least in the case of "incompletely treated", wherein it becomes clear from the direction information, in which orientation of the treatment direction incompletely treated areas are present, starting at the corresponding end point, and
ensures that a contour-following movement, in response to which the floor treatment machine follows the obstacle until it encounters a driving line, can be triggered at the end points for finding new starting points in each case, wherein
the contour-following movement starts with a component in the direction of the respective current orientation of the treatment direction,
when encountering the driving line, which was followed prior to the contour-following movement, on a route segment, which, according to the route segment storage, has not yet been followed, a new starting point is determined at that location and the driving direction of this driving line is chosen,
when encountering an adjacent driving line on a route segment, which, according to the route segment storage, has not yet been followed, a new starting point is determined at that location and the driving direction of this adjacent driving line is chosen,
when encountering a driving line on a route segment, which, according to the route segment storage, has already been followed, the end of a group of route segments, which run next to one another, is determined, wherein the controller then looks for an end point comprising the state "incompletely treated" in the route segment storage and approaches it with a position search movement, so as to tackle a new group of route sections, which run next to one another, starting at this end point in the orientation of the treatment direction stored for this end point, until no end point comprising the state "incompletely treated" is present any longer.

2. The floor treatment machine (1) according to claim 1, **characterized in that** the treatment mode ensures that the state "completely treated" or "incompletely treated", which is to be assigned to a current end point, can be determined by means of the distance from the current end point to the closest starting point on a driving line, which is located in the orientation, which is opposite to the current orientation of the treatment direction, directly next to the driving line comprising the current end point, wherein the state "incompletely treated" is chosen in the case of a distance above a predetermined value.

3. The floor treatment machine (1) according to claim 1 or 2, **characterized in that** it comprises at least one scan sensor (8), which ensures that distance measurements can be carried out in a substantially horizontal plane via a predetermined angular area, and that the treatment mode ensures that obstacles can be detected via distance measurements from the scan sensor (8), wherein the scan sensor (8) is preferably arranged in front of the drive wheels (3) substantially in the height area of the drive wheels (3).

4. The floor treatment machine (1) according to claim 3, **characterized in that** the floor treatment machine comprises the position detection device, wherein
the controller ensures that, in a detection mode, the detection of positioning areas, which are assigned to the floor surface, can be detected in a floor coordinate system, which is assigned to the floor surface, from distance measurements from the scan sensor (8) and driving information from the drive wheels (3), wherein line segments are determined in the floor coordinate system for detecting the positioning areas and the determined line segments represent measured distance points of the positioning areas comprising parameters of curve equations as sections of continuous lines, and
the controller ensures that, in the treatment mode, the position and the orientation of the floor treatment machine can be determined by means of the line segments, which are determined in the detection mode, and by means of the distance measurements from the scan sensor (8), which are detected for the current position, wherein route information from the two drive wheels (3) can preferably also be used and all of the information is converted into a position and orientation determination with error estimation, in particular by means of Kalman filter technology.

5. The floor treatment machine (1) according to any one of claims 1 to 4, **characterized in that** the floor treatment machine (1) comprises ultrasound sensors (16) and/or infrared sensors (17), by means of which obstacles can be detected, wherein the treatment mode ensures that obstacles can be detected via measurements from the ultrasound sensors (16) and/or infrared sensors (17) and the infrared sensors (17) are preferably oriented towards the floor so as to detect obstacles in the floor, in particular stairs.

6. The floor treatment machine (1) according to any one of claims 1 to 5, **characterized in that** the floor treatment machine (1) comprises at least one contact sensor (18) and the treatment mode ensures that the obstacles can also be detected via measurements from the at least one contact sensor (18), wherein preferably at least one deflection sensor is arranged between a chassis (14) and a housing area (2a), which is located in the front in driving direction, and in particular the chassis (14) is connected via a pivot connection (19) to a bracket (20) for holding the housing area (2a) and spring connections (21), which hold the housing area (2a) in a position of equilibrium, from which said housing area (2a) is deflected when coming into contact with an obstacle, are arranged between the bracket (20) and the housing area (2a), wherein at least one deflection sensor is arranged between the bracket (20) and the housing area (2a), which is located in the front, for detecting this deflection.

7. The floor treatment machine (1) according to any one of claims 1 to 6, **characterized in that**, in addition to the physical obstacles, the obstacles also comprise virtual obstacles, wherein the virtual obstacles can be input via the controller (6) before starting the treatment mode and cannot be passed over in the treatment mode and thus have the same effect as physical obstacles.

8. The floor treatment machine (1) according to any one of claims 1 to 7, **characterized in that** the treatment direction and the driving lines are determined perpendicular to the treatment direction by positioning and orienting the floor treatment machine when starting the treatment mode, preferably **in that** it is determined that the floor treatment machine stands so as to be oriented on a driving line and that the forwards orientation of the treatment direction runs perpendicular to the driving line so as to be oriented towards the right.

9. The floor treatment machine (1) according to any one of claims 1 to 8, **characterized in that** the effective expansion of the housing (2) and/or the effective location of the treatment area relative to the wheels (3, 4) are/is considered and in light of the effective distance measurements to an obstacle allows passing by an obstacle as accurate as possible.

10. The floor treatment machine (1) according to any one of claims 1 to 9, **characterized in that** the floor treatment device (9) is a cleaning device, preferably comprising at least one brush (9a), a cleaning liquid supply and a suction arrangement (12), but if necessary comprising a dry vacuum, or a spray suction device or a sweeper.

11. A method for treating floor surfaces by means of a floor treatment machine (1), comprising a housing (2), two drive wheels (3), at least one support wheel (4), a drive device (5), a controller (6), at least one obstacle-recognizing device and comprising a floor treatment device (9), which ensures that the floor can be treated in a treatment area comprising a predetermined location relative to the wheels (3, 4), as well as comprising a treatment width perpendicular to the driving direction, wherein the method carries out the steps of a treatment mode,
in the treatment mode, a surface, which is to be treated, is swept over by means of the treatment area of the floor treatment machine (1) by groups of route sections, which run next to one another, wherein the position and orientation of the floor treatment machine (1) in the floor coordinate system are provided by a position detection device,
**characterized in that**
in the treatment mode
a treatment direction with a forwards and backwards orientation is determined,
driving lines are determined, which are spaced apart perpendicular to the treatment direction, wherein the distances are chosen such that, when driving in opposite directions on driving lines, which are located next to one another, the area between the driving lines is completely treated by the treatment area,
route segments on the driving lines are driven from starting points to end points each in one driving direction, wherein the driving directions on adjacent driving lines are oriented in opposite direction,
the end points are determined **in that** driving cannot be continued on the respective driving line due to an obstacle, which is detected by an obstacle recognition device,
the starting point as well as the end point of the route segment, which was followed, are stored in a route segment storage and for the end point, at least one of the states "completely treated" or "incompletely treated" and at least in the case of "incompletely treated" also a direction information is stored, wherein it becomes clear from the direction information, in which orientation of the treatment direction incompletely treated areas are present, starting at the corresponding end point,
a contour-following movement, in response to which the floor treatment machine follows the obstacle until it encounters a driving line, is triggered at the end points for finding new starting points in each case, wherein
the contour-following movement starts with a component in the direction of the respective current orientation of the treatment direction,
when encountering the driving line, which was followed prior to the contour-following movement, on a route segment, which, according to the route segment storage, has not yet been followed, a new starting point is determined at that location and the driving direction of this driving line is chosen,
when encountering an adjacent driving line on a route segment, which, according to the route segment storage, has not yet been followed, a new starting point is determined at that location and the driving direction of this adjacent driving line is chosen,
when encountering a driving line on a route segment, which, according to the route segment storage, has already been followed, the end of a group of route segments, which run next to one another, is determined, wherein the controller then looks for an end point comprising the state "incompletely treated" in the route segment storage and approaches with a position search movement, so as to tackle a new group of route sections, which run next to one another, starting at this end point in the orientation of the treatment direction stored for the end point, until no end point comprising the state "incompletely treated" is present any longer.

12. The method according to claim 11, **characterized in that** the treatment mode determines the state "completely treated" or "incompletely treated", which is to be assigned to a current end point, by means of the distance from the current end point to the closest starting point on a driving line, which is located in the orientation, which is opposite to the current orientation of the treatment direction, directly next to the driving line comprising the current end point, wherein the state "incompletely treated" is chosen in the case of a distance above a predetermined value.

13. The method according to any one of claims 11 to 13, **characterized in that** the floor treatment machine (1) comprises at least one scan sensor (8), which ensures that distance measurements can be carried out in a substantially horizontal plane via a predetermined angular area and that, in the treatment mode, the obstacles are detected via distance measurements from the scan sensor (8) and/or via distance measurements from ultrasound sensors (16) and/or via measurements form infrared sensors (17) and/or via measurements from contact sensors (18) and/or via virtual objects, which are input before the start of the treatment mode.

14. The method according to claim 13, **characterized in that** the position detection is carried out by the floor treatment machine (1), wherein
in a detection mode, the controller (6) carries out the detection of positioning areas, which are assigned to the floor surface, in a floor coordinate system, which is assigned to the floor surface, from distance measurements from the scan sensor (8) and driving information from the drive wheels (3, 4), wherein line segments are determined in the floor coordinate system for detecting the positioning areas and the determined line segments represent measured distance points of the positioning areas comprising parameters of curve equations as sections of continuous lines, and
in the treatment mode, the controller (6) determines the position and the orientation of the floor treatment machine (1) by means of the line segments, which are determined in the detection mode, and by means of the distance measurements from the scan sensor, which are detected for the current position.

15. A computer program product, which triggers the execution of a method according to any one of claims 11 to 14 on a program-controlled floor treatment machine (1).

## Revendications

1. Machine de traitement de surface (1) pour le traitement de surfaces de sols, avec un boitier (2), deux roues motrices (3), au moins une roue-support (4), un dispositif d'entraînement (5), une commande (6), au moins un dispositif de détection d'obstacle et un dispositif de traitement de sol (9), qui permet d'effectuer un traitement de sol dans une zone de traitement avec une position prédéfinie par rapport aux roues (3, 4) ainsi qu'avec une largeur de traitement perpendiculaire au sens de roulement, la commande (6) comportant un mode de traitement, le mode de traitement permettant de parcourir une surface à traiter avec la zone de traitement de la machine de traitement par groupes de segments de trajectoire cheminant côte à côte, et dont la position et l'alignement de la machine de traitement de surface au sein du système de coordonnées du sol sont mis à disposition par un moyen de détection de position,
**caractérisée en ce, que**
le mode de traitement
permet de déterminer un sens de traitement avec orientation vers l'avant et vers l'arrière,
détermine sous forme de distances des trajectoires perpendiculaires au sens de traitement, lesdites distances étant sélectionnées de telle sorte que, pour des courses dans des sens opposés sur des trajectoires situées côte à côte, la zone entre les trajectoires soit entièrement traitée par la zone de traitement,
permet de parcourir sur les trajectoires des segments de trajectoire de points de début vers des points finaux respectivement dans un sens de roulement, les sens de roulement étant respectivement orientés en sens opposés sur des trajectoires adjacentes,
définit les points finaux de sorte que la poursuite du roulement sur la trajectoire respective ne soit pas possible à cause d'un obstacle détecté par le dispositif de détection d'obstacle,
enregistre dans une mémoire de segments de trajectoire, en ce qui concerne les points finaux respectivement le point de début ainsi que le point final du segment de trajectoire parcouru, au moins un des états « traité intégralement » ou « traité incomplètement » et également au moins une information de sens pour l'état « traité incomplètement », l'information de sens indiquant l'orientation du sens de traitement en partant du point final correspondant, dans laquelle il existe des zones traitées incomplètement, et
soit déclenché un déplacement de poursuite de contour aux points finaux pour trouver respectivement de nouveaux points de début, pour lequel la machine de traitement de surface suit l'obstacle jusqu'à ce qu'elle rencontre une trajectoire,
le déplacement de poursuite de contour commençant dans le sens de l'orientation respective actuelle du sens de traitement,
que lors de la rencontre de la trajectoire parcourue avant le déplacement de la poursuite de contour avec un segment de trajectoire qui n'a pas encore été parcouru selon la mémoire des segments de trajectoire soit déterminé là-bas un nouveau point de début et que le sens de roulement de cette trajectoire soit sélectionné,
que lors de la rencontre d'une trajectoire adjacente sur un segment de trajectoire pas encore parcouru selon la mémoire des segments de trajectoire soit déterminé là-bas un nouveau point de début et que le sens de roulement de cette trajectoire adjacente soit sélectionné,
que lors de la rencontre d'une trajectoire et d'un segment de trajectoire déjà parcouru selon la mémoire des segments de trajectoire il soit déterminé la fin d'un groupe de segments de trajectoire cheminant côte à côte, la commande recherchant alors dans la mémoire des segments de trajectoire un point final dont l'état correspond à « traité incomplètement » et qu'elle rejoint avec un mouvement de recherche de position, pour traiter à partir de ce point final, selon l'orientation de sens de traitement mémorisée pour ce point final, un nouveau groupe de segments de trajectoire de cheminements adjacents jusqu'à ce qu'il n'existe plus de point final répondant à l'état « traité incomplètement ».

2. Machine de traitement de surface (1) selon la revendication 1,
**caractérisée en ce,**
**que** le mode de traitement rend déterminable l'état « traité intégralement » ou « traité incomplètement » à affecter à un point final actuel à l'aide de la distance du point final actuel au plus proche point de début sur une trajectoire, qui est située directement à côté de la trajectoire comportant le point final actuel dans l'orientation opposée à l'orientation actuelle du sens de traitement, et qu'en cas d'écart supérieur à une valeur de consigne l'état « traité incomplètement » sera sélectionné.

3. Machine de traitement de surface (1) selon la revendication 1 ou 2,
**caractérisée en ce,**
**qu'**elle comporte au moins un capteur de balayage (8), qui permet des mesures de distances sur une zone angulaire prédéfinie dans un plan essentiellement horizontal, et que le mode de traitement permet de détecter des obstacles par des mesures de distances effectuées par le capteur de balayage (8), qui est de préférence situé devant les roues motrices (3), essentiellement au niveau de la hauteur des roues motrices (3).

4. Machine de traitement de surface (1) selon la revendication 3,
**caractérisée en ce,**
**que** la machine de traitement de surface comporte le moyen de détection de position, et dont
la commande en mode d'acquisition de mesures de distances effectuées par le capteur de balayage (8) et d'informations de roulement des roues motrices (3) permet de détecter et de relever des zones de positionnement affectées à la surface de sol dans un système de coordonnées du sol affecté à la surface du sol, et dont des segments de trajectoires sont déterminés dans le système de coordonnées du sol pour détecter et relever les zones de positionnement et que les segments de trajectoires déterminés représentent des points de distances mesurés des zones de positionnement avec des paramètres d'équations de courbes en tant que tronçons de lignes continues, et dont
la commande en mode de traitement rend déterminable la position et l'alignement de la machine de traitement de surface avec les segments de trajectoires déterminés en mode d'acquisition et avec les mesures de distances du capteur de balayage (8) relatives à la position actuelle, et dont en supplément des informations de déplacement des deux roues motrices (3) sont aussi utilisées et que toutes les informations soient converties, en particulier à l'aide de la technique de filtre de Kalman, en déterminations de position et d'alignement avec estimation d'erreur.

5. Machine de traitement de surface (1) selon une des revendications 1 à 4,
**caractérisée en ce,**
**que** la machine de traitement de surface (1) est équipée de capteurs ultrasonores (16) et/ou de capteurs infrarouges (17), qui permettent de détecter des obstacles, le mode de traitement permettant de traiter les obstacles par des mesures des capteurs ultrasonores (16) et/ou des capteurs infrarouges (17) et que les capteurs infrarouges (17) soient de préférence dirigés vers le sol pour détecter des obstacles sur le sol, en particulier des marches.

6. Machine de traitement de surface (1) selon une des revendications 1 à 5,
**caractérisée en ce,**
**que** la machine de traitement de surface (1) est équipée d'au moins un capteur de contact (18) et que le mode de traitement permet de détecter aussi les obstacles à partir de mesures fournies par l'au moins un capteur de contact (18), et que de préférence soit disposé au moins un capteur de déviation entre un châssis (14) et entre une partie du boîtier (2a) située à l'avant dans le sens du roulement et que le châssis (14) soit en particulier lié par une liaison pivotante (19) avec un support (20) destiné à maintenir la partie du boîtier (2a) située à l'avant ainsi que soient agencées des liaisons élastiques (21) entre le support (20) et la partie du boîtier (2a) située à l'avant, lesdites liaisons élastiques (21) maintenant la partie du boîtier (2a) située à l'avant en position d'équilibre, à partir de laquelle ladite partie du boîtier est déviée en cas de contact avec un obstacle, et que pour détecter et relever cette déviation, au moins un capteur de déviation soit situé entre le support (20) et la partie du boîtier (2a) située à l'avant.

7. Machine de traitement de surface (1) selon une des revendications 1 à 6,
**caractérisée en ce,**
**que** les obstacles concernent, outre des obstacles physiques, également des obstacles virtuels, qui sont paramétrables avant le démarrage du mode de traitement à l'aide de la commande (6) et qui ne peuvent pas être franchis en mode de traitement, ce qui implique qu'ils ont le même effet que les obstacles physiques.

8. Machine de traitement de surface (1) selon une des revendications 1 à 7,
**caractérisée en ce,**
**que** le sens de traitement et les trajectoires sont déterminables perpendiculairement au sens de traitement par le positionnement et l'alignement de la machine de traitement de surface lors du démarrage du mode de traitement, de préférence par le fait qu'il soit déterminé, que la machine de traitement de surface est alignée et positionnée sur une trajectoire et que l'orientation dans le sens avant du sens de traitement est dirigée vers la droite en cheminant perpendiculairement à la trajectoire.

9. Machine de traitement de surface (1) selon une des revendications 1 à 8,
**caractérisée en ce,**
**que** l'étendue effective du boitier (2) et/ou la position effective de la zone de traitement sont prises en compte par rapport aux roues (3, 4) et qu'il soit possible, dans la largeur utile des mesures effectives des distances, d'obtenir un passage à côté et un guidage de la zone de traitement aussi précis que possible au niveau de l'obstacle.

10. Machine de traitement de surface (1) selon une des revendications 1 à 9,
**caractérisée en ce,**
**que** le dispositif de traitement de sol (9) soit un dispositif de nettoyage de préférence avec au moins une brosse (9a), un dispositif d'alimentation en liquide de nettoyage et un dispositif d'aspiration (12), mais si nécessaire avec un aspirateur à poussières, ou un appareil d'injection-extraction ou une balayeuse.

11. Procédé de traitement de surfaces de sols, avec une machine de traitement de surface (1) avec un boîtier (2), deux roues motrices (3), au moins une roue-support (4), un dispositif d'entraînement (5), une commande (6), au moins un dispositif de détection d'obstacle et un dispositif de traitement de sol (9), qui permet d'effectuer un traitement de sol dans une zone de traitement avec une position prédéfinie par rapport aux roues (3, 4) ainsi qu'avec une largeur de traitement perpendiculaire au sens de roulement, le procédé exécutant les étapes d'un mode de traitement, qu'en mode de traitement une surface à traiter avec la zone de traitement de la machine de traitement de surface (1) soit traitée par des groupes de segments de trajectoire cheminant côte à côte, la position et l'alignement de la machine de traitement de surface (1) dans le système de coordonnées du sol étant mis à disposition par un moyen de détection de position,
**caractérisé en ce, que**
dans le mode de traitement
soit déterminé un sens de traitement avec orientation vers l'avant et vers l'arrière,
des trajectoires perpendiculaires au sens de traitement soient prédéterminées en distances, qui sont sélectionnées de telle sorte que, pour des courses dans des sens opposés sur des trajectoires situées côte à côte, la zone entre les trajectoires soit entièrement traitée par la zone de traitement,
soient parcourues sur les trajectoires des segments de trajectoire de points de début vers des points finaux respectivement dans un sens de roulement, les sens de roulement étant orientés respectivement en sens opposés sur des trajectoires adjacentes,
soient définis les points finaux de sorte que la poursuite du roulement sur la trajectoire respective ne soit pas possible à cause d'un obstacle détecté par le dispositif de détection d'obstacle,
soit enregistré dans une mémoire de segments de trajectoire, en ce qui concerne les points finaux, respectivement le point de début ainsi que le point final du segment de trajectoire parcouru, au moins un des états « traité intégralement » ou « traité incomplètement » et également au moins une information de sens pour l'état « traité incomplètement », l'information de sens indiquant l'orientation du sens de traitement en partant du point final correspondant, dans laquelle il existe des zones traitées incomplètement,
soit déclenché un déplacement de poursuite de contour aux points finaux pour trouver respectivement de nouveaux points de début, pour lequel la machine de traitement de surface suit l'obstacle jusqu'à ce qu'elle rencontre une trajectoire,
le déplacement de poursuite de contour commençant dans le sens de l'orientation respective actuelle du sens de traitement,
que lors de la rencontre de la trajectoire parcourue avant le déplacement de la poursuite de contour avec un segment de trajectoire qui n'a pas encore été parcouru selon la mémoire des segments de trajectoire soit déterminé là-bas un nouveau point de début et que le sens de roulement de cette trajectoire soit sélectionné,
que lors de la rencontre d'une trajectoire adjacente sur un segment de trajectoire pas encore parcouru selon la mémoire des segments de trajectoire soit déterminé là-bas un nouveau point de début et que le sens de roulement de cette trajectoire adjacente soit sélectionné,
que lors de la rencontre d'une trajectoire et d'un segment de trajectoire déjà parcouru selon la mémoire des segments de trajectoire il soit déterminé la fin d'un groupe de segments de trajectoire cheminant côte à côte, la commande recherchant alors dans la mémoire des segments de trajectoire un point final dont l'état correspond à « traité incomplètement » et qu'elle rejoint avec un mouvement de recherche de position, pour traiter à partir de ce point final, selon l'orientation de sens de traitement mémorisée pour ce point final, un nouveau groupe de segments de trajectoire de cheminements adjacents jusqu'à ce qu'il n'existe plus de point final répondant à l'état « traité incomplètement ».

12. Procédé selon la revendication 11,
**caractérisé en ce,**
**que** le mode de traitement détermine l'état « traité intégralement » ou « traité incomplètement » à affecter à un point final actuel à l'aide de la distance du point final actuel au plus proche point de début sur une trajectoire, qui est située directement à côté de la trajectoire comportant le point final actuel dans l'orientation opposée à l'orientation actuelle du sens de traitement, et qu'en cas d'écart supérieur à une valeur de consigne, l'état « traité incomplètement » soit sélectionné.

13. Procédé selon une des revendications 11 à 13,
**caractérisé en ce,**
**que** la machine de traitement de surface (1) comporte au moins un capteur de balayage (8), qui permet des mesures de distances sur une zone angulaire prédéfinie dans un plan essentiellement horizontal, et que soit détecté et relevé en mode de traitement les obstacles par des mesures de distances effectuées par le capteur de balayage (8) et/ou par des mesures de distances effectuées par des capteurs ultrasonores (16) et/ou par des mesures effectuées par des capteurs infrarouges (17) et/ou par des mesures obtenues par des capteurs de contact (18) et/ou que soit détectés et relevés des obstacles virtuels enregistrés avant le démarrage du mode de traitement.

14. Procédé selon la revendication 13,
**caractérisé en ce,**
**que** la détection et le relevé soient exécutés par la machine de traitement de surface (1), et dont
la commande (6) dans un mode d'acquisition de mesures de distances effectuées par le capteur de balayage (8) et d'informations de roulement des roues motrices (3,4) exécute la détection et le relevé des zones de positionnement affectées à la surface de sol dans un système de coordonnées du sol affecté à la surface du sol, des segments de trajectoires étant déterminés dans le système de coordonnées du sol pour détecter et relever les zones de positionnement et que les segments de trajectoires déterminés représentent des points de distances mesurés des zones de positionnement avec des paramètres d'équations de courbes en tant que tronçons de lignes continues, et dont
la commande (6) en mode de traitement détermine la position et l'alignement de la machine de traitement de surface (1) avec les segments de trajectoires déterminés en mode d'acquisition et avec les mesures de distances du capteur de balayage relatives à la position actuelle.

15. Produit logiciel pour ordinateur, qui pilote le déroulement d'un procédé selon une des revendications 11 à 14 sur une machine de traitement de surface (1) pilotée par logiciel.
